# EUROPEAN PATENT SPECIFICATION

(11) **EP 4 515 898 B1**
(45) Date of publication and mention of the grant of the patent: **04.02.2026**
(21) Application number: 23723172.5
(22) Date of filing: 27.04.2023
(51) Int. Cl.: H04W 12/08, H04L 9/40, H04W 12/00, H04W 12/02, H04W 12/084

(54) **SYSTEM AND METHOD FOR AUTHORIZING ACCESS TO SMART DEVICES IN A LOCAL ENVIRONMENT**
SYSTEM UND VERFAHREN ZUR AUTORISIERUNG DES ZUGRIFFS AUF INTELLIGENTE VORRICHTUNGEN IN EINER LOKALEN UMGEBUNG
SYSTÈME ET PROCÉDÉ D'AUTORISATION D'ACCÈS À DES DISPOSITIFS INTELLIGENTS DANS UN ENVIRONNEMENT LOCAL

(30) Priority: 28.04.2022 US 202217731455
(43) Date of publication of application: 05.03.2025
(73) Proprietor: Inter IKEA Systems B.V., 2616 LN Delft (NL)
(72) Inventor: HALLBERG, Ted, 283 36 Osby (SE)
(74) Representative: Ström & Gulliksson AB
(86) International application number: PCT/EP2023/061107
(87) International publication number: WO 2023/209087

(56) References cited:
- EP-A1- 4 044 552
- US-A1- 2015 372 999
- US-A1- 2020 220 853

## Description

### Technical Field

The present invention generally relates to access authorization. More specifically, the present invention relates to technical provisions for providing authorization of access to smart devices in a local environment.

### Background

Recent technology trends are showing a wide increase in homes or offices being connected to the Internet of Things (IoT). An IoT-based system is a system of interrelated "things", such as computing devices, mechanical and digital machines, objects, and even animals or people. Each thing within the IoT-system is generally provided with a unique identifier, so that it can be identified, transfer data, and communicate with other things within the system without requiring human interaction. The benefits of IoT-based systems are many, and involve, for instance, an improved quality of life, process monitoring, money and time savings, an increase in productivity, an increased revenue stream, and so forth.

By connecting homes and offices to the IoT, a number of challenges arise. Arguably one of the most critical challenges is related to data security and privacy. As data is constantly being collected, transmitted, stored and processed by various things in the IoT-based system, the data needs to be protected from malicious hackers, malwares, ransomwares, other types of software, or bots, etc. This is of particular importance in order to protect the integrity of devices, things, users and data associated with the IoT-based system.

The consideration of usability and efficiency versus security is also a much discussed topic. While it is desired to be able to quickly access a thing in as few and easy steps as possible, both locally from within a local network, and remotely via e.g. a cloud or wide area network, security must also be guaranteed. Moreover, certain things that are historically not associated with the Internet, such as ovens, lamps or ventilation systems, typically do not have any well-established security standards in place. Hence, connecting such things to the IoT-based system, by e.g. installing one or more communication means, may cause them to be exposed and thus an easy target for someone or something with malicious intent.

Current existing solutions that attempt to solve the problem of maintaining data integrity and providing secure and user-friendly authorization in IoT-based systems are often times insufficient in different aspects. Some solutions require exposure of critical information related to integrity or privacy or users or devices. As many existing IoT-systems involve storing personal information on cloud-based networks, people are constantly exposed to the risk of having their passwords and/or personal information breached. A few solutions fail with either one of the user-friendliness or security aspect, and others are overly complex and involve, for instance, expensive local gateways, routers or home or office appliances. Additional existing technologies may provide a decent solution for local configurations, whilst being unsatisfactory for remote configurations, or vice versa.

It is therefore desired to provide an authorization solution for IoT-based systems, which can maintain integrity and privacy of users, as well as assuring security and user-friendliness, for both local and remote connections.

In light of the observations above, the present inventor has identified a particular insightful approach of access authorization that offers improvements in terms of integrity, security and user-friendliness.

US2015372999A1 discloses a method for authorizing access for an application programming interface (API) client or API client device to data of one or more data models of one or more smart devices includes retrieving a number of access tokens from an authorization server, and providing, via a single connection, the number of access tokens in a request made by the API client or the API client device to the API, wherein the number of access tokens are used to verify access rights of the API client or the API client device to read data for a number of users associated with the one or more data models of the one or more smart devices.

US2020220853A1 relates to session management for mobile devices. A computing system includes a web browser and a native application configured to, at a first time, receive first instructions to log out of a first session authorized by way of an authorization server. Based on the first instructions, the native application removes a first access token that was provided to the native application by the authorization server and is related to authorization of the first session. At a second time later than the first time, the native application receives second instructions to authorize a second session and, based thereon, generates third instructions configured to cause the authorization server to terminate active sessions between the authorization server and the web browser prior to initiating a log-in procedure with the web browser for the second session. The third instructions are provided to the authorization server, which provides an authorization code exchangeable for a second access token related to the second session.

### Summary

It is accordingly an object of the invention to eliminate or alleviate at least some of the problems or drawbacks referred to above.

In a first aspect, a computer-implemented system for authorizing access to one or more smart devices provided in a local environment is provided. The system comprises a client device provided in, or external to, the local environment; a local network node provided in the local environment; and a remote network node provided external to the local environment. The client device is configured to generate a challenge, and provide the challenge and a personal identifier to the local network node upon the client device being provided in the local environment, or to the remote network node upon the client device being provided external to the local environment. Either one of the local network node, upon the client device being provided in the local environment, or the remote network node, upon the client device being provided external to the local environment, is configured to generate authorization data comprising at least an authorization code. The local network node, upon the client device being provided in the local environment, is configured to send the personal identifier to the remote network node. The remote network node is configured to generate a link and send the link to an address associated with the personal identifier. Either one of the local network node, upon the client device being provided in the local environment, or the remote network node, upon the client device being provided external to the local environment, is configured to: in response to the client device having executed the link, send the authorization code to the client device, receive an access token request from the client device, the access token request comprising the authorization code, validate the authorization code based on the challenge, and upon successful validation of the authorization code: generate an access token, and send the access token to the client device, thereby authorizing the client device access to the one or more smart devices in the local environment.

In one or more embodiments, the access token is provided for the client device in the local environment, the local network node being configured to generate a local symmetric key, the remote network node being configured to generate a remote asymmetric key pair including a remote private key and a remote public key, wherein the local network node and the remote network node are configured to perform a key exchange.

In one or more embodiments, the remote network node is further configured to generate a complete encryption key by means of the local symmetric key and a remote symmetric key stored at the remote network node.

In a second aspect, a computer-implemented method for authorizing access to one or more smart devices provided in a local environment is provided. The method involves: by a client device provided in, or external to, the local environment: generating a challenge; and providing the challenge and a personal identifier to a local network node provided in the local environment upon the client device being provided in the local environment, or to a remote network node provided external to the local environment upon the client device being provided external to the local environment; by either one of the local network node, upon the client device being provided in the local environment, or the remote network node, upon the client device being provided external to the local environment: generating authorization data comprising at least an authorization code; and by the local network node, upon the client device being provided in the local environment: sending the personal identifier to the remote network node; by the remote network node: generating a link, and sending the link to an address associated with the personal identifier; and by either one of the local network node, upon the client device being provided in the local environment, or the remote network node, upon the client device being provided external to the local environment: in response to the client device having executed the link, sending the authorization code to the client device; receiving an access token request from the client device, the access token request comprising the authorization code, validating the authorization code based on the challenge, and upon successful validation of the authorization code: generating an access token, and sending the access token to the client device, thereby authorizing the client device access to the one or more smart devices in the local environment.

Embodiments of the method according to the second aspect of the invention may generally involve any or all of the functionality performable by any of the embodiments of the system according to the first aspect of the invention.

The provision of a computer-implemented system and method as disclosed herein will solve or at least mitigate one or more of the problems or drawbacks identified in the background section of this document. These and other aspects, objectives, features and advantages of the invention and its disclosed embodiments will appear from the following detailed disclosure, from the attached dependent claims as well as from the drawings.

Generally, all terms used in the claims are to be interpreted according to their ordinary meaning in the technical field, unless explicitly defined otherwise herein.

All references to "a/an/the [element, device, component, means, step, etc]" are to be interpreted openly as referring to at least one instance of the element, device, component, means, step, etc., unless explicitly stated otherwise. The steps of any method disclosed herein do not have to be performed in the exact order disclosed, unless explicitly stated.

### Brief Description of the Drawings

Figure 1a is an embodiment of a local environment associated with an IoT-system comprising one or more smart devices.
Figure 1b is a block diagram of a computer-implemented system according to one embodiment.
Figure 2 is a flowchart diagram that illustrates access authorization according to an embodiment representing local access authorization.
Figure 3 is a flowchart diagram that illustrates access authorization according to an embodiment representing remote access authorization.
Figure 4 is a flowchart diagram that illustrates local communication with smart devices provided in a local environment.
Figure 5 is a flowchart diagram that illustrates remote communication with smart devices provided in a local environment.
Figures 6a-b illustrate a computer-implemented method according to one embodiment.
Figure 7 is a flowchart diagram that illustrates access authorization according to an embodiment representing local access authorization.
Figure 8 is a flowchart diagram that illustrates access authorization according to an embodiment representing remote access authorization.
Figure 9 is a flowchart diagram illustrating an embodiment of activation of remote access authorization by a client device being provided in a local environment.
Figures 10a-b illustrate a computer-implemented method according to one embodiment.

### Detailed Description

Embodiments of the invention will now be described with reference to the accompanying drawings. The invention may, however, be embodied in many different forms and should not be construed as limited to the embodiments set forth herein; rather, these embodiments are provided so that this disclosure will be thorough and complete, and will fully convey the scope of the invention to those skilled in the art. The terminology used in the detailed description of the particular embodiments illustrated in the accompanying drawings is not intended to be limiting of the invention. In the drawings, like numbers refer to like elements.

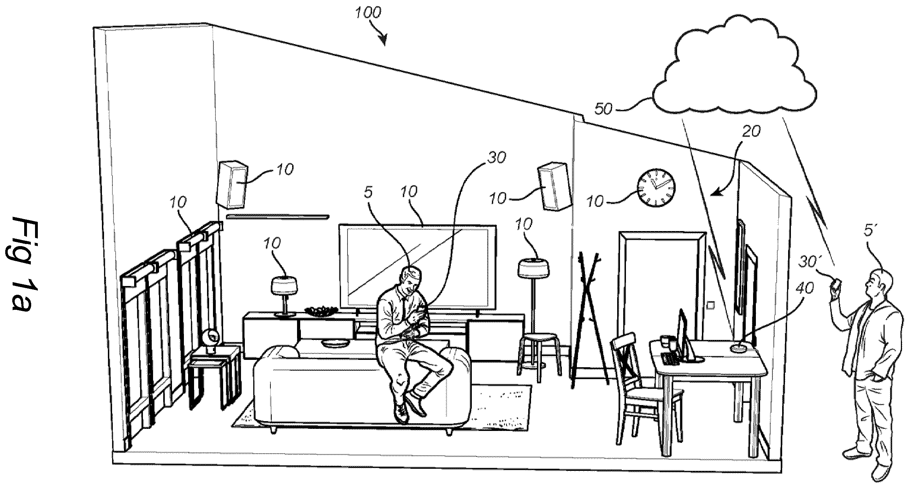

With reference to Figure 1a, a local environment 20 illustrating a smart home is shown. The local environment 20 shown is to be viewed as a mere example of a potential smart home, in which the inventive concepts of the present disclosure can be applied. As will become apparent given the following detailed description, other environments may serve a similar purpose. A computer-implemented system 100 is provided in the local environment 20. The computer-implemented system 100 comprises a plurality of smart "things" 10, such as speakers, lamps, a TV, a clock and electric blinds. Each one of these "things" will hereinafter be referred to as a smart device 10. The system 100 further comprises a local network node 40, and a user 5 that is holding a client device 30.

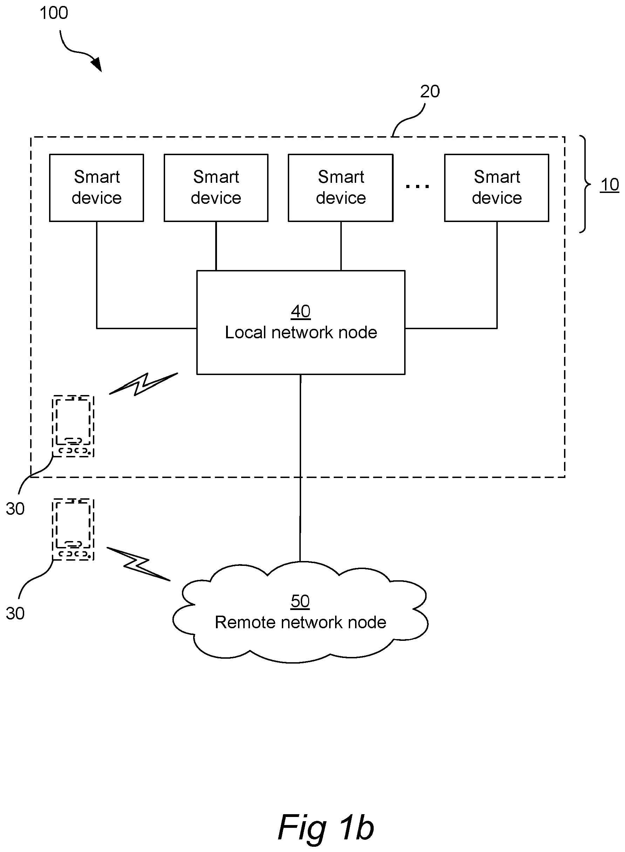

Seen in Figure 1a is also a second user 5' standing outside of the house, i.e. external to the local environment 20. The user 5' is holding a respective client device 30', which is connected to the local network node 40 via a remote network node 50, depicted as a cloud. The components of the system 100 will now be explained thoroughly with reference to Figure 1b.

Figure 1b illustrates a block diagram of a computer-implemented system 100 according to some inventive aspects of the present disclosure. In Figure 1b, the smart devices 10 depicted in Figure 1a are represented as blocks. The system 100 is an IoT-based system 100, or simply an IoT-system 100. These different wordings will be used interchangeably throughout the description. As discussed in the background section of the present disclosure, the IoT-based system 100 is a system of interrelated "things", such as computing devices, electrical, mechanical and digital appliances, equipment, machines, objects, etc. (i.e. smart devices 10). The one or more smart devices 10 is to be interpreted as any type of device, structure, entity or object that, in some sense, is arranged or configured with communication means. The communication means are configured to enable the associated smart device 10 to communicate with other devices, structures, entities or objects that are provided or arranged in the same local environment 20 and also comprise some type of communication means. The communication means may hence be any type of controller, interface, sensor and/or intelligent device.

In preferred embodiments, the local environment 20 is a smart home or office. This essentially means that the local environment 20 is represented as the physical surroundings of a home or an office location. A home or an office location is in this sense to be interpreted as where people live or work. In alternative embodiments, the local environment 20 may be interpreted in the widest of sense, namely as any type of physical location that can be called a home or an office. A home or office may in such embodiments be e.g. any type of physical location having a defined area where people or animals live, visit, rent or spend time in, such as houses, accommodations, hotels, lobbies, theaters, planes, airports, lounges, trailers, campers, maritime vessels, and so forth. The term "smart" as used in relation with smart offices or homes is referring to the fact that said homes or offices provide, host or contain one or more smart devices 10.

In preferred embodiments, the one or more smart devices 10 are being selected from a group consisting of home furnishing, home appliances, home equipment, office furnishing, office appliances and office equipment. A home or office furnishing, appliance or equipment may be any type of object, device, structure or entity that is commonly found in a home or work location, that can appropriately be connected to an IoT-system for smart control, such at the IoT-system 100. A home or office appliance, furnishing or equipment may thus be one or more "things" associated with the IoT-system 100, including but not limited to a computer, phone, tablet, TV, speaker system, lighting system, sensors such as motion or light sensors, ventilation system, air condition, air purifier, heating system, electrical equipment or tool, bed, alarm system, alarm clock, garage port, planter, sauna, video game console, locking arrangement, vacuum cleaner, electric blind or curtain, desk, fridge, oven, stove, microwave, coffee machine or hot-tub. The skilled person can conceive other types of appropriate "things" that may potentially be represented as one or more smart devices 10. Alternatively, the one or more smart devices 10 may be any other type of device, object, structure or entity that is found in any of the kinds of local environments 20 listed above being appropriately configured with smart means for communication.

The system 100 further comprises a local network node 40. The local network node 40 is arranged somewhere within the local environment 20. The local network node 40 may be a local hub in the local environment 20, that is configured to be able to receive, send, store, and process data that is being sent between things associated with the local environment 20, such as for instance the one or more smart devices 10.

In a preferred embodiment, the local network node 40 is a gateway being configured as a local access point that is able to communicate with devices being connected thereto, as well as with other networks being provided external to the gateway. More preferably, the local network node 40 is an IoT-gateway based on known technologies in the art of IoT-gateways. An IoT-gateway may be configured as either one of a bus-based exchange protocol (data-centric), e.g. DDS, REST or XMPP, or broker-based exchange protocol (message-centric), e.g. AMQP, CoAP, MQTT, JMI. Alternatively, the local network node 40 may be a router or a switch, or additional similar types of networking hardware devices. The local network node 40 may be one device arranged at a specific location within the local environment 20. Alternatively, the local network node 40 may be two or more physical devices that are operatively connected and arranged at different locations within the local environment 20.

The system 100 further comprises a remote network node 50. The remote network node 50 is configured as a remote service that is capable of communicating with the local network node 40, e.g. through Internet. Such communication involves receiving and transmitting data. The remote network node 50 may be accessible external to the local environment 20, and is typically not configured to be able to communicate directly with the smart devices 10 without data first being routed through the local network node 40. In some embodiments, the remote network node 50 is configured to directly communicate with the one or more smart devices 10.

In a preferred embodiment, the remote network node 50 is a cloud-based service. A cloud-based service may be based on commonly known cloud-computing platforms such as e.g. Amazon Web Services, Google Cloud Platform, Microsoft Azure, DigitalOcean, IBM Bluemix or Alibaba Cloud. In alternative embodiments, the remote network node 50 may be configured as other types of networks that are distributed or provided external to the local environment 20.

The local network node 40 and the remote network node 50 each comprises some type of storage means configured to store data associated with the system 100. The storage means may be based on different or similar technologies. In one embodiment, the storage means may be physical hardware such as one or more or a combination of hard-disk drives, solid state drives, USB sticks or memory cards. In one embodiment, the storage means may be maintained by and/or configured as a cloud-based service, such as the cloud-based service of the remote network node 50. Connection to cloud-based storage means may be established using DBaaS (Database-as-a-service). For instance, cloud-based storage means may be deployed as a SQL data model such as MySQL, PostgreSQL or Oracle RDBMS. Alternatively, deployments based on NoSQL data models such as MongoDB, Amazon DynamoDB, Hadoop or Apache Cassandra may be used. DBaaS technologies include, but are not limited to Amazon Aurora, EnterpriseDB, Oracle Database Cloud Service or Google Cloud. In one embodiment, the storage means is a cloud storage gateway.

The system 100 further comprises a client device 30. In Figure 1b, the client device 30 is depicted with dashed lines. The dashed lines indicate that the client device 30 may be provided inside or external to the local environment 20.

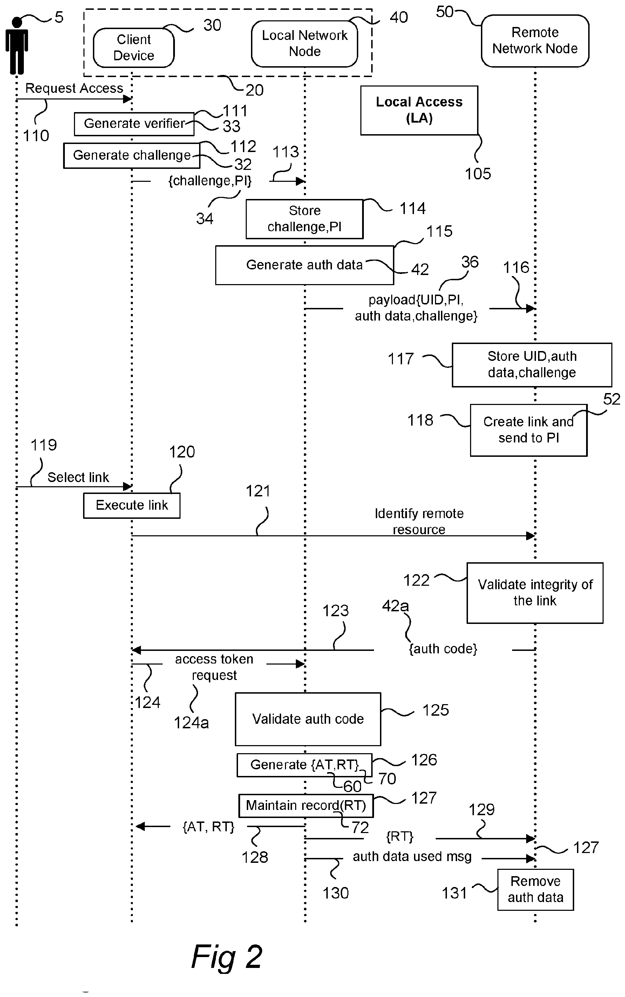

The client device 30 may access the IoT-system 100 and/or instruct the one or more smart devices 10 using two different modes. The first mode, wherein the client device 30 is provided external to the local environment 20, corresponds to remote access and will from now on be referred to as Access Away From Home (AAFH) (not shown). The AAFH mode may be requested whenever the client device 30 is accessing the one or more smart devices 10 from a location not being within the local environment 20, such as the home or office environment. For instance, the client device 30 may want to control pre-heating of an oven, turn on the air condition, activate the electric blinds if it is sunny outside, and so forth, while being located external to the local environment 20. The second mode, wherein the client device 30 is provided within the local environment 20, e.g. at home or at work, corresponds to and will be referred to as Local Access (LA) (not shown). The term "within" means that the client device 30 is directly connected to the local environment 20 via e.g. an associated local network node 40. For example, the client device 30 and the local network node 40 can be connected to the same Wi-Fi (i.e. Wireless local network WLAN) and/or Local Area Network (LAN). Correspondingly, the term "external to" means the opposite, i.e. that the client device 30 is not connected to the local environment 20 via an associated local network node 40. The two modes will be described thoroughly later on in this disclosure with reference to Figures 2-6.

In one embodiment, the client device 30 is a smart mobile communication device, such as a mobile phone, or alternatively a tablet computer, personal digital assistant, smart glasses, smart watch, smart bracelet, or any combination thereof. In alternative embodiments, the client device 30 is a personal computer, or similar.

In one embodiment, the client device 30 comprises functionalities for running or executing computer programs, such as a native, web-based or hybrid application. The application may have a backend (server-side service), a frontend (client-side service) and an associated Application Programming Interface (API). The client device 30 may be configured to receive input through one or more different input sources. The user (e.g. the user 5 or 5' shown in Figure 1a) of the client device 30 may execute different functions by interacting with or manipulating the computer program, via e.g. a graphical user interface, speech-to-text interface, haptic interface, command line interface, gesture-based interface, augmented reality interface, or any similar type of interface technology. Executable functions requested by the user may involve, for instance, access authorization or control instructions to the one or more smart devices 10. This will be thoroughly described with reference to Figures 2-6.

Although not explicitly visualized in Figure 1b, the IoT-system 100 comprises a plurality of communication means. As has been previously discussed, the communication means may be provided for the one or more smart devices 10 as to enable communication within the local environment 20. This is however not the only prevalent communication within the system 100, as the client device 30, the local network node 40 and the remote network node 50 also comprise similar or different types of means for communication. Communication means are necessary in order to enable the IoT-system 100 to perform its intended functionality and thus some of the inventive aspects of this disclosure. Communication is enabled in two directions, generally between a start node and an end node, wherein the smart devices 10, the local network node, the remote network node 50, and/or the client device 30 may be considered as end nodes or start nodes.

The plurality of communication means may be any known short-range or long-range communication techniques, or any combination thereof. Long-range communication techniques involve e.g. W-CDMA/HSPA, GSM, UTRAN, LTE, LTE-A, STARLINK or any technique configured to be available with the fifth generation (5G) communication standard. Short-range communication techniques involve e.g. wireless RF standards based on IEEE 802.11, IEEE 802.15, ZigBee, WirelessHART, WiFi, Bluetooth^{®}, BLE, RFID, WLAN, mesh communication, or any other form of proximity-based device-to-device radio communication signal such as LTE Direct. Some known IoT-communication services which may be employed for short-range communication involve e.g. MQTT IoT, CoAP, DDS, NFC, AMQP, LoRaWAN, RFID, Z-Wave, Sigfox, Thread, EnOcean, celluarly based communication protocols. Communication techniques may also include, but not be limited to a beacon protocol such as iBeacon, AltBeacon, URIBeacon or Eddystone. Moreover, NFC or (ultra)sound communication can also be used as short-range communication in the local environment 20.

According to preferred embodiments of the invention, communication between the one or more smart devices 10 and the local network node 40 is enabled using short-range standards. Moreover, communication between the local network node and the remote network node 50 is enabled using long-range standards. Furthermore, communication between the client device 30 and the remote network node 50 is enabled using long-range standards. Additionally, communication between the client device 30 and the local network node 40 is enabled using short-range standards. The skilled person realizes that different configurations may apply.

Turning now to Figures 2-3, two flowcharts of different embodiments of access authorization are visualized, which employ some of the inventive concepts of this disclosure. The flowcharts serve as exemplifying illustrations, which means that the access authorizations are by no means limited to the illustrations and description presented with reference to Figures 2-3. As the skilled person will realize, additional or fewer associated steps may be involved.

With reference to Figure 2, a client device 30 is provided in the local environment 20 and is requesting access in a LA mode 105. The flowchart also illustrates the remote network node 50 provided external to the local environment 20, the local network node 40 provided in the local environment 20, and the user 5 of the client device 30. The user 5 is in most use cases present within the local environment 20, although certain scenarios where the user 5 is outside of the local environment 20 and interacting with the client device 30 being provided in the local environment 20 may be conceived.

Before access authorization is initiated, the local network node 40 and the remote network node 50 have exchanged signing or encryption keys. Such keys can, for instance, be provided using known public/private-key, or asymmetric, cryptography techniques. The exchange of signing or encryption keys may be involve configuring the local network node 40 to generate a key pair used for token signing and validation. The local network node 40 may then send the public key from that key pair to the remote network node 50. The remote network node 50 may then generate a key pair used for token signing and validation that is specific for that local network node 40. Subsequently, the remote network node 50 may send the public key from that key pair to the local network node 40. When this key exchange is done, the local and remote network nodes 40, 50 can sign tokens that the other party will trust. The respective private signing keys will preferably never leave the respective nodes 40, 50.

The access authorization is initiated by the user 5 performing 110 an access request by interacting with the client device 30 via any of the previously mentioned interface techniques. In response thereto, the client device 30 is configured to generate 111 a verifier 33. The verifier 33 may be generated using e.g. a high-entropy cryptographic random string comprising a plurality of characters. The client device 30 is further configured to hash the verifier 33, thereby generating 112 a challenge 32. The verifier 33 may be hashed using any known cryptographic hash functions, such as e.g. SHA-1, SHA-2, SHA-3, SHA-256, MD5, CRC32, RIPEMD or BLAKE2. A salt may be added to the verifier 33 before it is being hashed. The challenge 32 may further be encoded using any suitable encoding function, such as base64 URL.

When the client device 30 has generated the challenge 32, the client device 30 is further configured to provide 113 the challenge 32, together with a personal identifier 34, denoted PI in the figure, to the local network node 40. The personal identifier 34 is preferably associated with an email address. The personal identifier 34 may alternatively be associated with any type of identifier that appropriately identifies the user 5.

The local network node 40 is configured to store 114 the challenge 32 and the personal identifier 34 provided by the client device, and generate 115 authorization data 42. Preferably, the authorization data 42 comprises at least an authorization code 42a. The authorization data 42 may further comprise one or more randomly generated numbers. The authorization code 42a is not bound to personal details of the user 5, and may for instance be a random one-time hashed value which is insusceptible to e.g. potential crack attacks. The quantity of randomly generated numbers may vary, and different configurations may have a different quantity of randomly generated numbers.

Generally, with a higher quantity of random values, the design complexity of the system is increased, but the security is improved. Hence, the quantity of numbers may vary depending on safety, regulatory and compliance requirements associated with the IoT-system 100. For instance, providing access authorization to lower-security systems wherein it is possible to e.g. control a lamp in a home environment may only require one randomly generated number, whereas access authorization for high-security business process environments may require several randomly generated numbers.

Nevertheless, in a preferred embodiment, the authorization data 42 comprises two randomly generated numbers. If the authorization code 42a has been validated, it is an indication that the client device 30 has been provided access to one or more smart devices 10 in the system 100.

The local network node 40 is further configured to send 116 a payload comprising the authorization data 42, the challenge 32, the personal identifier 34, and in some embodiments also a unique client device identifier 36, denoted UID in the figure, to the remote network node 50. The unique client device identifier 36 may be the same identifier for different client devices 30 of the same user 5.

The unique client device identifier 36 is an identifier that is associated with the client device 30 in the IoT-system 100. The unique client device identifier 36 may, for instance, assume a value corresponding to an addition of an identifier of the local network node 40 and an additional randomly generated value. The identifier of the local network node 40 is an identifier that is unique for said local network node 40 in the associated IoT-system 100. The unique client device identifier 36 may, for instance, be a predetermined value that has been determined before the access authorization of the client device 30 is initiated.

In response to receiving the authorization data 42, the challenge 32, the personal identifier 34 and the unique client device identifier 36, the remote network node 50 is configured to store 117 the received authorization data 42, the challenge 32 and the unique client device identifier 36. Note that the personal identifier 34 is not stored. Not storing the personal identifier 34 at the remote network node 50 is an important design consideration, since it provides a maintained integrity of the user 5 of the client device 30. Since the personal identifier 34 is not stored in the remote network node 50, a person or software with malicious intent will not know what user is associated with the authorization data 42 or the challenge 32. The person or software with malicious intent trying to intercept, decrypt or decode information at the remote network node 50 will therefore be at loss.

Thanks to the above design consideration of the system, there is no need for a central database of any kind to store personal information, such as e.g. email addresses or passwords, related to users 5. There is hence no risk of a malicious person or software acquiring e.g. a database that comprises hashed passwords, as the only stored records are completely anonymized and contains no passwords or user email addresses. Thus, even if the malicious person or software somehow manages to retrieve or intercept some of the data used for authorization or control that is sent between any of the entities, no relevant personal information could be interpreted therefrom.

Instead of storing the personal identifier 34, the remote network node 50 is configured to generate and send 118 a link 52 to an address associated with the personal identifier 34. The link 52 is preferably a URL, or alternatively any similar type of string that identifies a virtual resource, e.g. a web page. The link 52 is based on at least parts of the authorization data 42, such as the authorization code 42a and/or the randomly generated numbers. Sending the link 52 may be handled by an appropriate email service known in the art, such as Amazon SES. The link 52 is easy to open on the client device 30. In another embodiment, the link 52 may be opened on any other appropriate device(s) associated with the user 5. It may therefore possible to request access from the client device 30, and open the link 52 and trigger execution of the link 52 on a different device.

The link 52 may be generated as a composition of the randomly generated numbers, and it may identify a resource in the remote network node 50. "Identify a resource" is in this sense referring to that the link 52 is associated with a functionality of the remote network node 50. For instance, the link 52 may be capable of triggering execution of e.g. instructions, a task, a program or other types of resources or backend functionalities of the remote network node 50. Such execution may be triggered in response to the link 52 being executed by the client device 30.

In one embodiment, the link 52 can only be used one time, which makes it ineligible to fabricate false duplicate links 52 and thereby authorize a device 30 that is not supposed to be authorized.

In one embodiment, the link 52 is associated with or comprises a timer. Such timer may determine for how long the link 52 can be executed before it being automatically invalidated. For instance, the timer of the link 52 may be indicative of a time-to-live (TTL) of approximately 10 minutes. The TTL-value may be different depending on system configurations and security standards. The skilled person realizes that the TTL-value may assume an arbitrary value suitable for these type of authorization processes.

Hence, the link 52 can be seen as "secret" or "anonymous", in the sense that it is not associated with the user 5, and that it is generated from one or more completely randomly generated numbers. This makes it very difficult for the malicious person or software to discover the identity of the user 5, fabricate a false link 52, or in any other way intercept the access authorization flows described herein for gaining unauthorized access to the client device 30, the smart devices 10, the local network node 40 or the remote network node 50.

The resource of the remote network node 50 may be a resource that is maintained and/or executable by any of the previously mentioned cloud technologies. The resource may be directly associated with the remote network node 50. Alternatively, the resource may be implemented as a separate backend service that is in communication with the remote network node 50.

The next step shown in the flowchart in Figure 2 is for the user 5 to select 119 the link 52 on the client device 30 (e.g. by clicking it in an email received from an email service of the remote network node 50, such as Amazon SES), or alternatively on another device from which the link 52 can safely be accessed. In response to the user 5 having selected the link 52, the client device 30 is configured to execute it at 120. As a consequence, the identified resource of the remote network node 50 is triggered 121, by extracting information the randomly generated numbers in the link 52 and extracting the identifier of the local network node 40. In this step, the remote network node 50 may be configured to discard the one or more randomly generated numbers and sending 123 part of the authorization data 42 to the client device 30. Specifically, it is the authorization code 42a that is being sent 123 to the client device 30. This process is effectively performed while still maintaining the integrity of the user 5, i.e. not exposing any sensitive personal information such as e.g. the personal identifier 34. Discarding the one or more randomly generated numbers provides particular security improvements over known art as it eliminates future traceability associated with the authorization process. Moreover, discarding the randomly generated numbers makes sure that the link previously sent cannot be triggered again. Triggering the identified resource at the remote network node 50 enables validation 122 of the integrity of the link 52, which improves the overall security of the system. The validation 122 of the integrity of the link 52 is in one embodiment done by extracting link parameters from the link, such as the one or more randomly generated numbers, and compare the link parameters to data stored 117 in the remote network node 50 to validate that the link 52 indeed is valid. If the link parameters can be found among the stored data, the link is valid. If not found, the link is not valid. By configuring data records (such as the authorization data 42) stored 117 in the remote network node 50 with a TTL of for example 1, 5, 7, 10, etc., minutes, the security may be improved since the user must trigger the link before the associated authorization data 42 is deleted at the remote network node. By deleting the randomly generated numbers once an associated link is triggered, the link 52 can only be used/triggered one time.

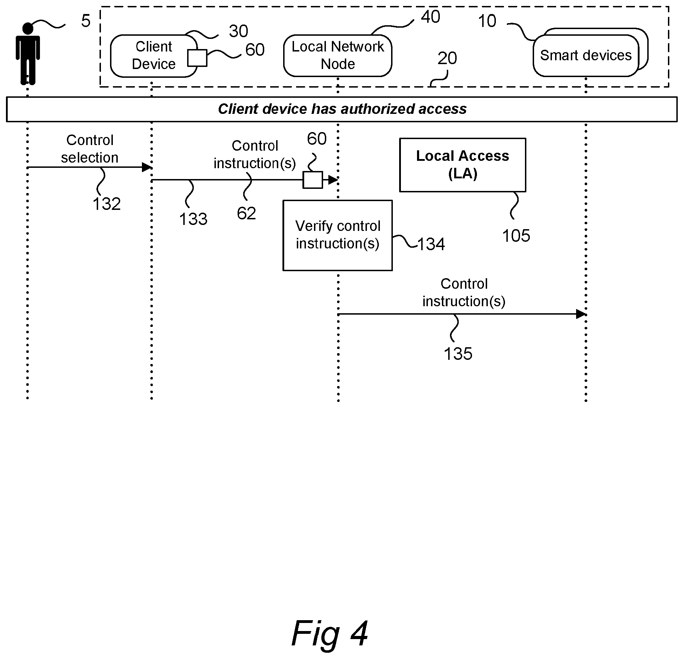

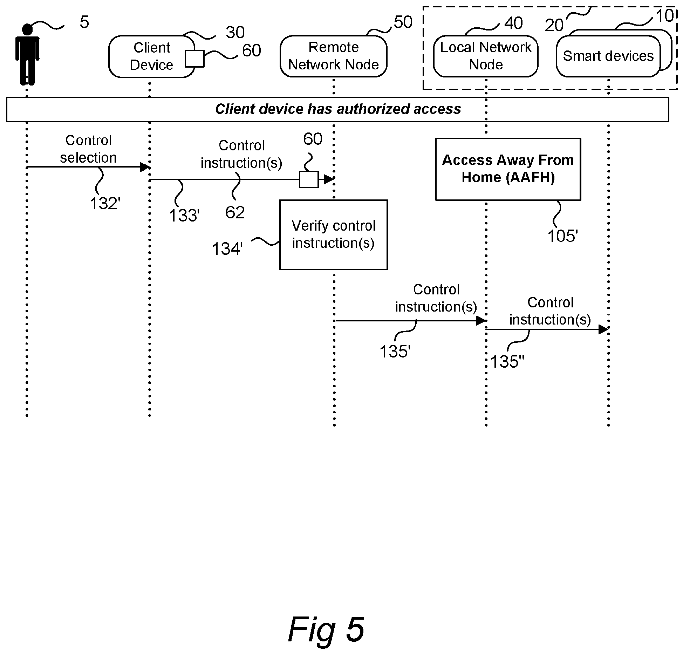

The local network node 40 is further configured to convert the validated authorization code 42a into an access token 60 (denoted AT in the figure) to be used by the client device 30 when controlling the one or more smart devices 10. This process involves receiving 124 an access token request 124a from the client device 30, wherein the access token request 124a comprises the authorization code 42a. The local network node 40 may further be configured to receive a verifier 33 in addition to, or together with, the access token request 124. The verifier 33 is the same verifier 33 that was previously generated in step 111, and used to generate 112 the challenge 32. When the local network node 40 has received 124 the authorization code 42a and the verifier 33, the verification procedure 125 may, for instance, involve generating a control challenge (not shown) for the authorization code 42a being based on the verifier 33 using the same hashing technique as was used for generating 112 the challenge 32. This control challenge may then be compared with the stored challenge 32 as received 113 from the client device 30. If there is a match, i.e. the control challenge matches the stored challenge 32, an access token 60 is generated 126 and sent 128 to the client device 30. The access token 60 may comprise an authorization signature and an expiry time, and is associated with the unique client device identifier 36. The expiry time may vary, but are in most cases approximately 24 hours. When the client device 30 has received the access token 60, the client device 30 is given access control to the IoT-system 100 in different ways. Such access control will be further discussed with reference to Figures 4 and 5.

In one embodiment, the local network node 40 is configured to generate 126 a refresh token (denoted RT in the figure) 70 together with the access token 60. This is also shown in Figure 2. Both the access token 60 and the refresh token 70 are preferably generated as JSON web tokens, or any similar token technology such as e.g. OAuth2, Auth0 or Amazon Cognito. The tokens 60, 70 may in some embodiments be encrypted if sensitive information is to be stored therein. The refresh token 70 may comprise an expiry time and is associated with the unique client device identifier 36. The local network node 40 is configured to send 128 the refresh token 70 to the client device 30 together with the access token 60. Moreover, the local network node 40 is configured to send 129 the refresh token 70 to the remote network node 50.

Upon generation 126 of the refresh token 70, the local network node 40 may be configured to maintain 127 a record 72 of said refresh token 70. This record 72 is responsible for maintaining relevant data associated with the refresh token 70 for the specific client device 30 which it was generated for. Such relevant data may involve instructions for generating a new access token 60 if it has expired. The record 72 may also be an overall record 72 comprising information of all the refresh tokens 70 which have been generated for any number of users. For instance, the record 72 may maintain a list of refresh tokens 70 and unique client device identifiers 36 associated with each token 70. Additional relevant data which may be appropriate to keep track of may include expiry times of each refresh token 70, access tokens 60 associated with the refresh tokens 70, a number of generated access tokens 60 and/or refresh tokens 70, statistical data related to access or control, and so forth. Upon the remote network node 50 having received the refresh token 70, the remote network node 50 may be configured to maintain 127 a record of said refresh token 70, using a similar procedure as the local network node 40.

In different situations, it may be necessary to regenerate, replace or exchange the access token 60 and/or the refresh tokens 70. This is to improve the overall authenticity of the generated tokens 60, 70 and thus the security of the system 100. Such situations involve, for instance, when either one of the tokens 60, 70 is for some reason marked as invalid, due to e.g. an invalid authorization signature, a passed (lapsed) expiry time, or a mismatch in unique client device identifier 36 and client device 30. If the expiry time of the access token 60 has passed, the refresh token 70 is typically used for generating another access token 60. If the refresh token 70 has expired, the user may be required to re-authorize to the system 100 by performing the authorization process once more in order to receive new access and refresh tokens 60, 70. Another situation may be that the client device 30, provided by the refresh token 70, has requested a new access token 60. Yet another situation may be conceived, wherein the expiry time of the refresh token 70 is about to pass, and an access token 60 has been generated. This may cause the local network node 40 to trigger generation of a new refresh token 70, so as to avoid a situation where the user 5 is required to re-authenticate to the system 100 at a later stage when the old refresh token 70 would have been expired.

Figure 2 further shows a step after the tokens 60, 70 have been generated and distributed, and the record 72 maintained, wherein the local network node 40 is configured to transmit 130 a message to the remote network node 50. This message indicates that the authorization data 42 has been used, and particularly that the validated authorization code 42a has been consumed. Consequently, to further improve upon the integrity of the user 5, the remote network node 50 is configured to discard 131 the remainder of the authorization data 42, i.e. the stored authorization code 42a. Hence, a person or software with malicious intent will not be able to retrieve any of the authorization data 42 by listening to or trying to attack the remote network node 50 once the access and refresh tokens 60, 70 have been generated and distributed.

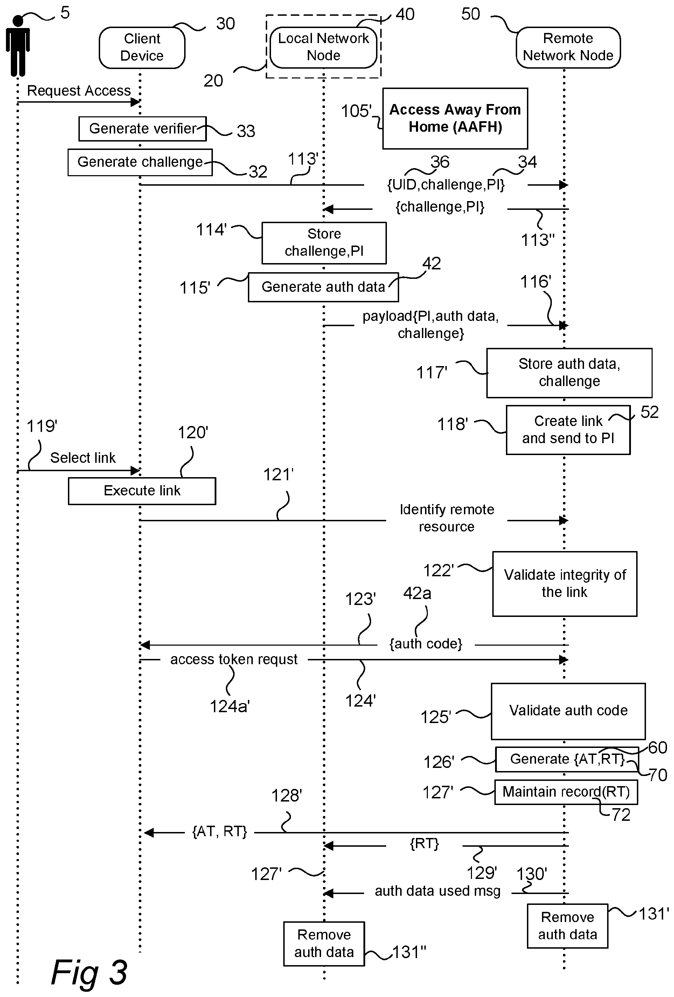

With reference to Figure 3, a client device 30 is provided external to the local environment 20 and is requesting access in the AAFH mode 105'. The flowchart also illustrates the remote network node 50 provided external to the local environment 20, the local network node 40 provided in the local environment 20, and the user 5 of the client device 30. The user 5 is in most use cases located external to the local environment 20, although certain scenarios where the user 5 is inside the local environment 20 and interacting with the client device 30 being provided external to the local environment 20 may be conceived.

Before access authorization is initiated, the local network node 40 and the client device 30 ideally have a pre-established relationship. Such relationship may be required in order for the remote network node 50 not to store any personal details of the user 5 during the AAFH 105' authorization process. The pre-established relationship may, for instance, relate to the client device 30 being provided with some type of information, such as the identifier of the local network node 40. This is to ensure that the client device 30 knows what local network node 40 the one or more smart devices 10 are in communication with.

Following Figure 3, it can be seen that many of the AAFH 105' authorization events are similar to those of the LA 105 authorization events as described with reference to Figure 2. However, there are some configuration differences, which will now be described.

As the client device 30 is located external to the local environment 20, communication is not initiated directly with the local network node 40, but instead with the remote network node 50. The client device 30 is hence configured to transmit 113' the generated challenge 32 and the personal identifier 34 to the remote network node 50. By doing so, the remote network node 50 will also receive the unique client device identifier 36. An important aspect, however, is that the remote network node 50 does not store any personal details of the user 5 that may compromise the integrity of said user 5. The remote network node 50 is further configured to route 113'' the challenge 32 and the personal identifier 34 to the local network node 40. To summarize, the client device 30 is configured to provide the challenge 32 and the personal identifier 34 to the local network node 40, via the remote network node 50.

As is seen in Figure 3, the steps 114', 115', 116', 117', 118', 119', 120', 121' and 122' are, preferably, performed similarly to those described with reference to Figure 2 (114, 115, 116, 118, 119, 120, 121). Note that the unique client identifier 36 has already been stored at the remote network node 50, as it was received at 113.

In the AAFH 105' authorization mode, it is not the local network node 40, but instead the remote network node 50, that is configured to validate 125' the authorization code 42a. The remote network node 50 is configured to perform this process similarly as the local network node 40 did with reference to Figure 2.

The remote network node 50 is further configured to generate 126' the access token 60. Moreover, the remote network node 50 may be configured to generate 126' the refresh token 70 together with the access token 60. This may be performed generally in accordance with what was described with reference to Figure 2, along with distribution 128' of the tokens 60, 70. However, as it is the remote network node 50 that is configured to generate 126' the tokens 60, 70, and not the local network node 40, it is instead configured to transmit 129' the refresh token 70 to the local network node 40. Moreover, both the remote network node 50 and the local network node 40 are configured to maintain 127' the record 72 of the refresh token 70 generally in accordance with what was described with reference to Figure 2.

When the tokens 60, 70 have been generated and distributed, the remote network node 50 is configured to transmit 130' a message to the local network node 40 stating that the authorization data 42 has been used, and particularly that the validated authorization code 42a has been consumed. Consequently, to further improve upon the integrity of the user 5, the remote network node 50 is configured to discard 131' the remainder of the authorization data 42, i.e. the authorization code 42a. In one embodiment, as further described above, the remainder of the authorization data 42, i.e. the authorization code 42a and the one or more random values, may be associated with a time stamp. Such time stamp may assure that the remaining data will be discarded after some time, in case either one of the local network node 40 or the remote network node 50 for some reason does not receive the message as described above. The time stamp may, for instance, assume a value of five minutes. The skilled person realizes that any appropriate time stamp value can be assumed. Moreover, as the local network node 40 previously generated the authorization data 42 at 115', it is now configured to discard the remainder of it at 131" as the authorization has been performed.

The LA-mode and the AAFH-mode have now been described with references to Figures 2 and 3. With the authorization procedure described herein, the access authorization may be initiated in the LA-mode and finished in the AAFH-mode, shall the client device 30 exit the local environment 20 at any point in the procedure. Oppositely so, with the authorization procedure described herein, the access authorization may be initiated in the AAFH-mode and finished in the LA-mode, shall the client device 30 enter the local environment 20 at any point in the procedure. For example, the request 110 for authorization may be done when the user is within the local environment, while the selecting 119 of the link may be done when the user is external to the local environment, or vice versa.

The access authorization in either one of the LA-mode or the AAFH-mode enables further control of the one or more smart devices 10 in either one of the LA-mode or the AAFH-mode. Hence, once the access token 60 and/or the refresh token 70 have been provided for the client device 30 in either one of the LA-mode or the AAFH-mode, control of the smart device(s) 10 may be performed in either one of the modes, regardless of how the access was provided.

Figures 4-5 illustrate flowcharts of communication between the client device 30 and the one or more smart devices 10. As is apparent from the drawings, this communication is performed after the client device 30 has authorized access, i.e. having received the access token 60.

The client device 30 may be configured to send 133 one or more control instructions 62, together with the access token 60, to the one or more smart devices 10. If the client device 30 is has received the access token 60, it proves that either one of the local or remote network node 40, 50 has generated the access token 60 and distributed it to the client device 30. To put it in other words, by having received the access token 60, the client device 30 is authorized to control the one or more smart devices 10 in which the client device 30 has previously requested access to control.

The control instructions 62 may be sent in response to the user 5 having selected 132 a control choice from e.g. a mobile application of the client device 30. This may be performed using any of the previously mentioned interaction and/or manipulation techniques. The control choice(s) may be indicative of any type of instruction that the smart devices 10 can receive. The control choice may, for instance, involve instructing a smart device 10 to perform a task, activate or deactivate itself or a part thereof, send a message to the local network node 40, the remote network node 50 or to any other smart device 10 within the local environment 20, and so forth. Such tasks may involve e.g. turning a light bulb on or off, dimming a light bulb, turning on or off a power outlet, controlling the volume of a speaker or activating electric blinds, etc.

In Figure 4, an embodiment is shown wherein the client device 30 is in the LA mode 105. The one or more control instructions 62 are preferably verified before control, so that the client device 30 is authorized to control the smart devices 10. In the LA mode 105, the local network node 40 is configured to verify 134 the one or more control instructions 62. The verification process may involve several steps being related to verifying the authenticity of the access token 60 as provided by the client device 30. Verifying the authenticity of the access token 60 may, for instance, involve verifying that the authorization signature is valid, that the expiry time has not passed, and that the unique client device identifier (not shown) is associated with the client device 30 having sent the one or more control instructions 62. Once the control instructions 62 have been verified, the local network node 40 is configured to route 135 the instructions 62 directly to the target smart device 10. The user 5 of the client device 30 may decide the target smart device 10, along with the control selection.

In one embodiment, the client device 30 may have access authorization on different levels, corresponding to performing different actions or tasks for different smart devices 10. For instance, the client device 30 may be authorized to instruct a light bulb to deactivate itself, but the same client device 30 may not be authorized to unlock or lock a smart lock. Different smart devices 10 may thus be associated with different security levels, which may be regulated by e.g. the smart device itself 10, the local network node 40 and/or the remote network node 50. The access token 60 and/or the refresh token 70 may be associated with such security level information, so that the client device 30 can via e.g. a user interface view its current access level.

If one or more of the verification checks are not fulfilled, action may be taken. The user 5 of the client device 30 may be notified that access has been denied for the requested control choice. Such notification may involve a message, an error code as to why access was denied, and a possible remediation procedure to be performed for reconnection, if viable. In one embodiment, the access denied message may be sent to a remote central for further action. For instance, if it is detected that an unauthorized user is constantly sending a large number of control choices to the one or more smart devices 10, it may be an indication of a DDOS attack (Distributed Denial of Service). Hence, the user(s) being authorized in the associated IoT-system 100 may be notified, and the unauthorized user sending the plurality of control instructions 62 may be prohibited from doing so for a predetermined time period.

In Figure 5, an embodiment is shown wherein the client device 30 is in the AAFH mode 105'. In Figure 5, the client device 30 is provided with the access token 60, meaning that authorization has been given so as to enable the client device 30 to control the one or more smart devices 10. Similar to the LA mode 105, the client device 30 may be configured to send one or more control instructions 62, together with the access token 60, to the one or more smart devices 10. Further, the one or more control instructions 62 must first be verified so that the client device 30 is authorized to control the smart devices 10. In the AAFH mode 105', the remote network node 50 is configured to verify 134' the one or more control instructions 62. The verification process typically involves similar verification steps as in the LA mode 105. However, after verification of the control instruction 62, the remote network node 50 is configured to transmit 135', 135" instructions 62 via the local network node 40, before arriving at the target smart device 10. This is simply due the remote network node 50 not being directly connected to the smart devices 10, and communication need to pass the local network node 40 within the IoT-system 100.

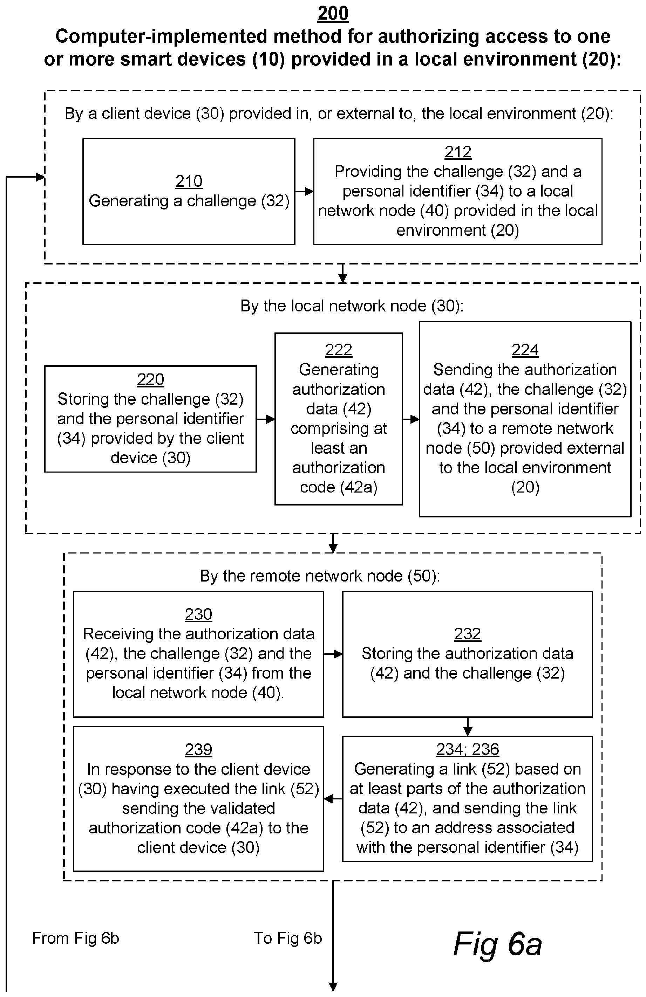

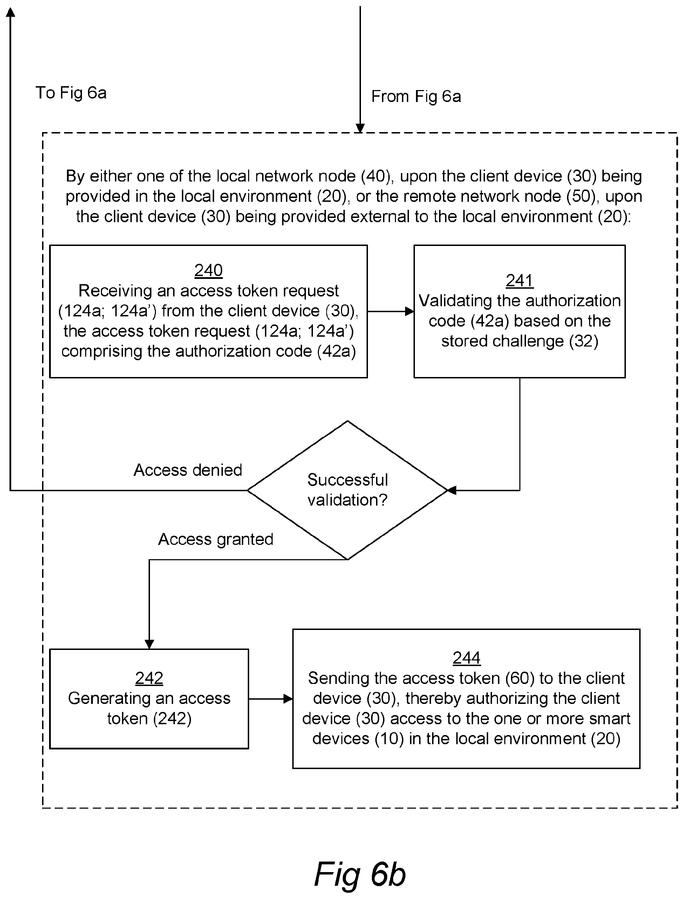

Figures 6a-b illustrate a computer-implemented method for authorizing access to the one or more smart devices 10 that are provided in the local environment 20. The shown method steps, 210, 212, 220, 222, 224, 230, 232, 234, 236, 238, 239, 240, 241 242, and 244 are generally performed in accordance with the flowcharts and description presented with reference to Figures 2 and 3.

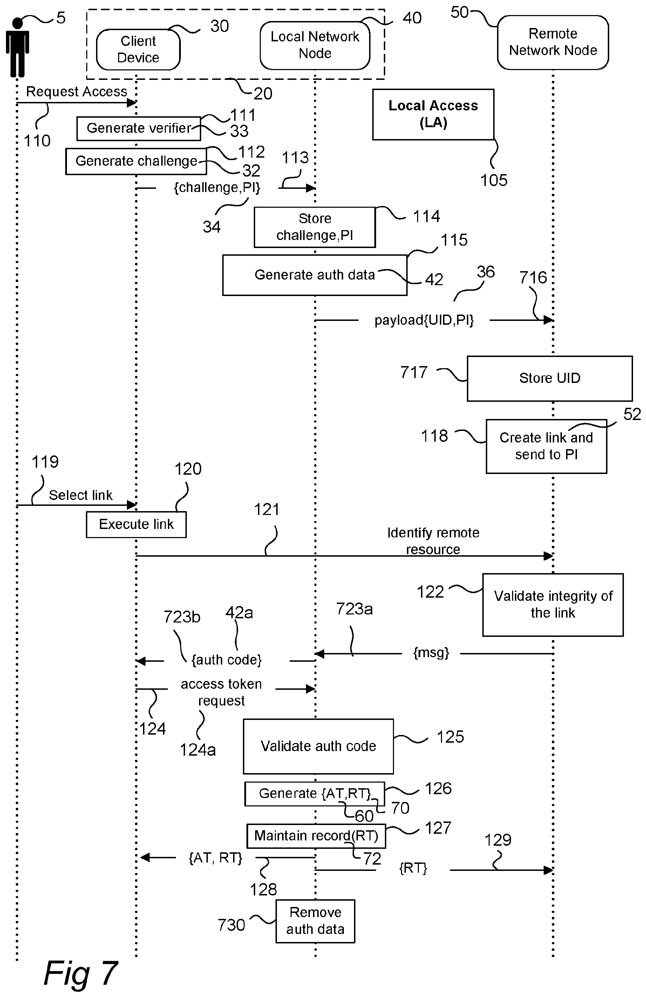

Turning now to Figures 7-8, two flowcharts of different embodiments of access authorization are visualized, which employ some of the inventive concepts of this disclosure. The flowcharts serve as exemplifying illustrations, which means that the access authorizations are by no means limited to the illustrations and description presented with reference to Figures 7-8. As the skilled person will realize, additional or fewer associated steps may be involved. Figures 7-8 present alternative implementations of the embodiments visualized and described with reference to Figures 2-3, having some further advantageous design decisions.

With reference to Figure 7, a client device 30 is provided in the local environment 20 and is requesting access in a LA mode 105. The flowchart also illustrates the remote network node 50 provided external to the local environment 20, the local network node 40 provided in the local environment 20, and the user 5 of the client device 30. The user 5 is in most use cases present within the local environment 20, although certain scenarios where the user 5 is outside of the local environment 20 and interacting with the client device 30 being provided in the local environment 20 may be conceived.

Many of the steps of the flowchart of Figure 7 correspond to those described with reference to Figure 2, wherein same numbers (i.e. 110, 111, 112, 113, 114, 115, 119, 120, 121, 122, 124, 124a, 125, 126, 127, 128, 129) refer to same steps. On the other hand, there are some differences seen in the steps 716, 717, 723a, 723b, 730. In essence, these differentiating steps relate to the same feature which is that the authorization data 42 is not sent to the remote network node 50. The present inventor has realized that the authorization in local access mode 105 can be performed securely without exposing the authorization data 42 to the outside world, i.e. remotely. At 716, only the UID 36 and the personal identifier have to be sent to the remote network node 50. It is thus only the UID 36 that is stored at 717. Alternatively, the local network node 40 may send parts of the authorization data 42 excluding the authorization code 42a, for instance one or more of the randomly generated numbers as discussed with reference to Figure 2.

Because of the remote network node 50 not having stored the authorization data 42, and thus not the authorization code 42a either, the remote network node 50 cannot send the authorization code 42a to the client device 30 once the integrity of the link is validated at 122. Instead, at 723a, the remote network node 50 is configured to notify the local network node 40 that the link has been validated, for instance by sending a message (msg) stating that a transaction has been verified. Alternatively, step 723a may involve notifying the local network node 40 by sending parts of the authorization data 42 excluding the authorization code 42a, for instance one or more of the randomly generated numbers.

After being notified that the link 52 is valid, the local network node 40 is configured to send the authorization code 42a to the client device 30 at 723b.

After the end of the distribution of the access token 60 and refresh token 70, the local network node 40 may be further configured to remove the remainder of the authorization data 730, for instance the randomly generated numbers.

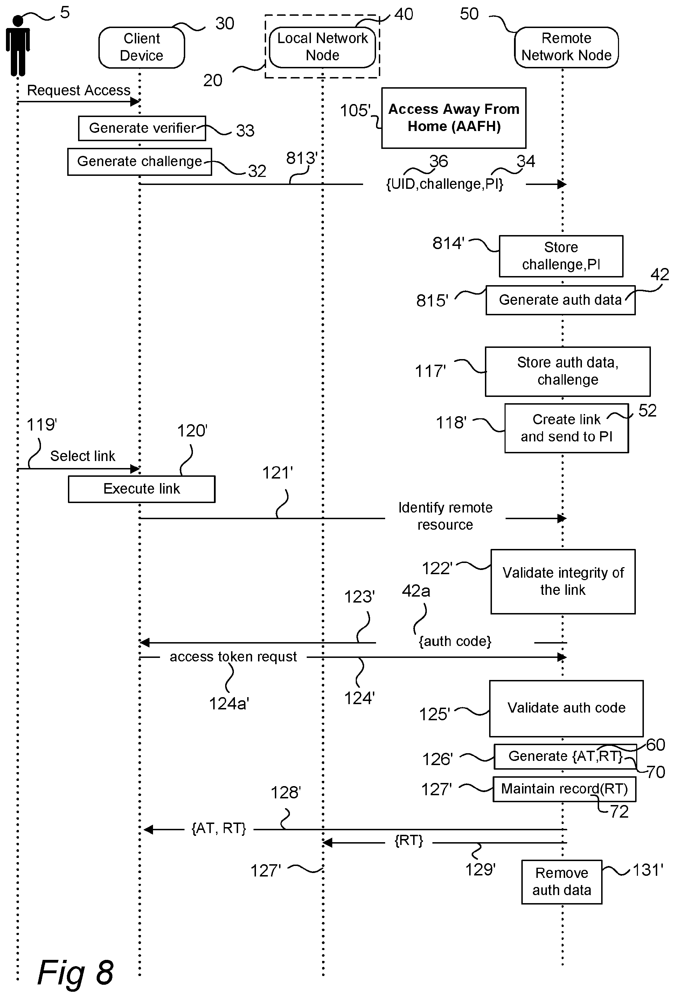

With reference to Figure 8, a client device 30 is provided external to the local environment 20 and is requesting access in the AAFH mode 105'. The flowchart also illustrates the remote network node 50 provided external to the local environment 20, the local network node 40 provided in the local environment 20, and the user 5 of the client device 30. The user 5 is in most use cases located external to the local environment 20, although certain scenarios where the user 5 is inside the local environment 20 and interacting with the client device 30 being provided external to the local environment 20 may be conceived.

Many of the steps of the flowchart of Figure 8 correspond to those described with reference to Figure 3, wherein same numbers (i.e. 117', 118', 119', 120', 121', 122', 123', 124', 125', 126', 127', 128', 129', 131') refer to same steps. On the other hand, there are some differences seen in the steps 813', 814' and 815'. In essence, these differentiating steps relate to the same feature which is that the local network node 40 is no longer involved in the authorization procedure for the AAFH 105' mode.

At 813', the client device 30 is configured to send the UID 36, challenge 32 and personal identifier 34 to the remote network node 50. The remote network node 50 is configured to store the challenge 32 and the personal identifier at 814', and generate the authorization data 42 at 815'. Accordingly, in this implementation, the local network node 40 no longer generates the authorization data 42. In fact, in the entire authorization procedure, the local network node 40 is not required.

The AAFH 105' authorization explained with reference to Figure 8 requires that an access token 60 has previously been generated locally, for instance by any of the procedures seen in Figure 2 or 7. Since the access token 60 has been signed by the local network node 40, the remote network node 50 knows which client device 30 is associated with which client device 30. The AAFH 105' authorization explained with reference to Figure 8 may also be performed in cases where an access token 60 has not been previously generated, with some modifications to the authorization procedure. Modifications include that the remote network node 50 is configured to map personal identifiers with local network nodes 40 for determining which client device(s) 30 that are associated with which local network nodes(s) 40. This is performed prior to the generation of the authorization data 42.

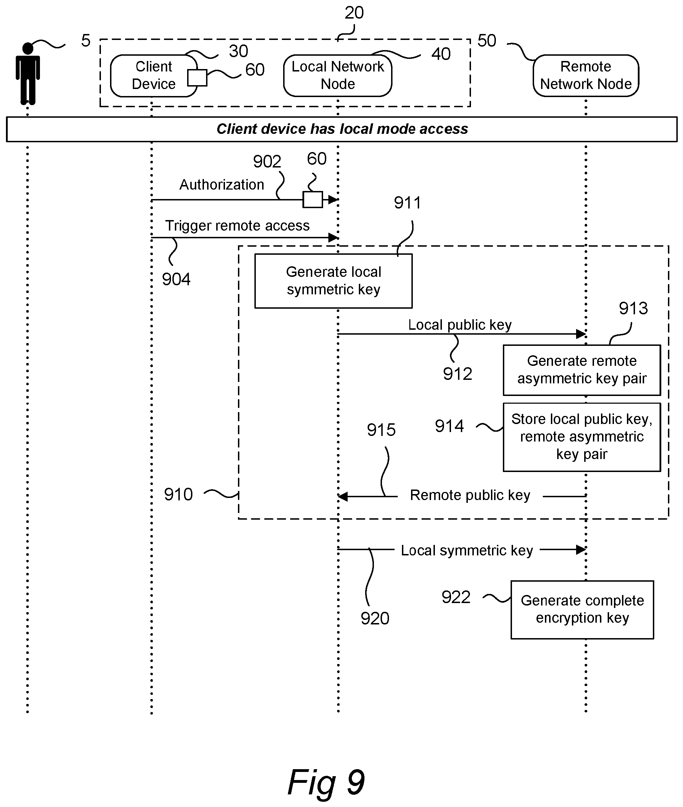

In Figure 9, a flowchart of remote access activation according to one embodiment is visualized. The remote access activation may be performed to allow both of the local network node 40 and the remote network node 50 to sign data once the access token 60 has been generated in the local access mode, for instance by the procedures of either one of Figures 2 or 7. The client device 30 comprises a signed (validated) access token 60 and is provided in the local environment 20.

A first step 902 involves configuring the client device 30 to locally authorize by means of the access token 60. Subsequently, the client device 30 is configured to trigger remote access, thus triggering a key exchange 910 between the local network node 40 and the remote network node 50. As described in the present disclosure with reference to Figures 2 and 3 (which applies to Figures 7 and 8 as well), the local network node 40 and the remote network node 50 already have exchanged signing or encryption keys. These keys differ from the keys that are being generated in the key exchange 910 which will now be described.

The key exchange 910 comprises a first step 911 wherein the local network node 40 is configured to generate a local symmetric key. The local symmetric key may be generated by means of any suitable symmetric encryption technologies known in the art, such as AES.

At 912, the local network node 40 is configured to send its local public key to the remote network node 50. The local public key corresponds to the public key generated by the local network node 40 before access authorization was initiated, as discussed with reference to Figures 2 and 3 (which applies to Figures 7 and 8 as well).

At 913, the remote network node 50 is configured to generate a remote asymmetric key pair including a remote private key and a remote public key. The remote asymmetric key pair may be generated by means of any suitable asymmetric technologies known in the art, such as RSA or Diffie-Hellman key exchange. Hence, the remote asymmetric key pair is a *second* asymmetric key pair, i.e. not the same pair of asymmetric keys that were generated and exchanged between the local network node 40 and the remote network node 50 prior to the access authorization.

At 914, the remote asymmetric key pair is stored, together with the local public key.

At 915, the remote public key is shared with the local network node 40, thus finalizing the key exchange. Such a key exchange involves that the local network node 40 is in persistent connection mode with the remote network node 50, thus allowing both of the local and remote nodes 40, 50 to sign e.g. control data used to control the smart devices 10.

The remote access activation procedure may further involve the additional steps seen at 920 and 922. At 920, the local network node 40 is configured to send the local symmetric key to the remote network node 50. The remote network node 50 is further configured to generate a complete encryption key. The complete encryption key is generated by means of the local symmetric key and a remote symmetric key associated with the remote network node 50. The remote symmetric key may be a predefined symmetric key being generated using e.g. AES. The complete encryption key may be generated by concatenating the local symmetric key and the remote symmetric key and creating a hash of the concatenated local/remote symmetric keys, wherein the hash represents the complete encryption key. Any suitable hash functions known in the art may be used, such as SHA-1, SHA-2, SHA-3, SHA-256, MD5, CRC32, RIPEMD or BLAKE2. A salt may further be added to either one or all of the local symmetric key, remote symmetric key and the concatenated local/remote symmetric key before it is being hashed.

The complete encryption key may be used to encrypt the personal identifier. The complete encryption key may in some embodiments be further used to encrypt additional data, for instance data relating to the client device 30 or its user(s), the smart devices 10 or the local network node 40, which may be considered sensitive.

The complete encryption key is preferably never stored at the remote network node 50. A new complete encryption key may thus be generated every time the remote network node 50 receives the local symmetric key from the local network node 40, and be used for encryption or decryption of data. To this end, any message sent between the local network node 40 and the remote network node 50 may be accompanied by the local symmetric key such that the remote network node 50 is capable of generating the complete encryption key. Due to the deterministic nature of hash functions, the complete encryption key will always be the same, provided that the same keys, i.e. the local symmetric key and the remote symmetric key, are used for its generation.

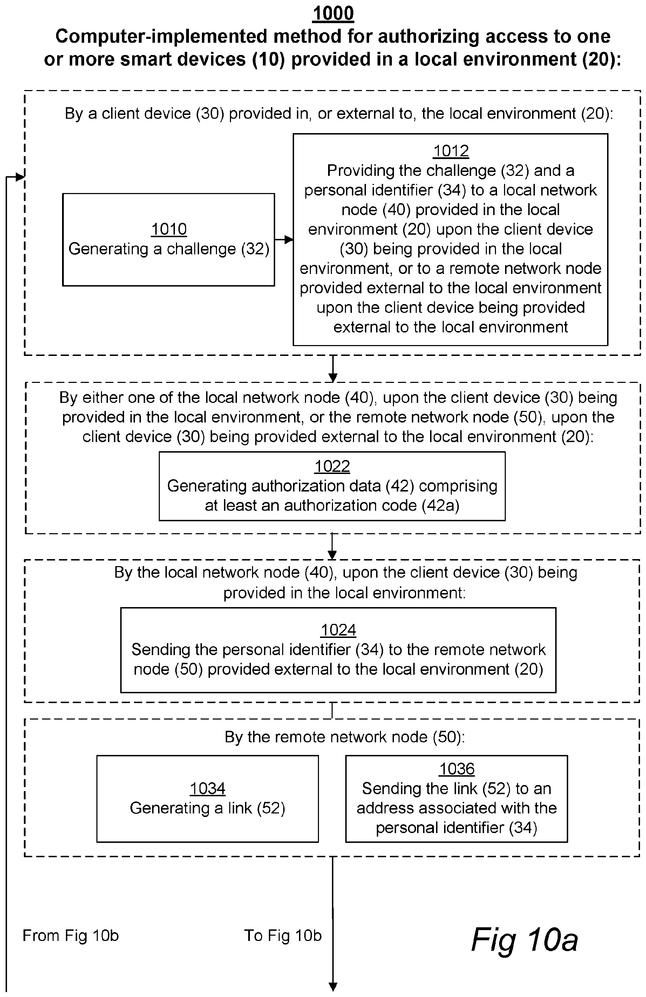

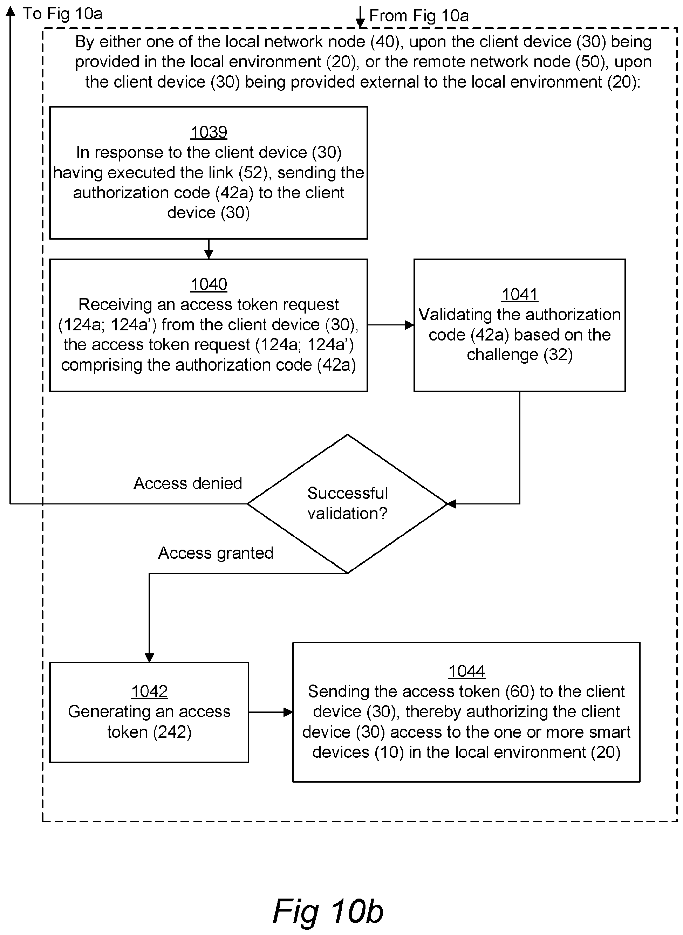

Figures 10a-b illustrate a computer-implemented method for authorizing access to the one or more smart devices 10 that are provided in the local environment 20. The shown method steps, 1010, 1012, 1022, 1024, 1034, 1036, 1039, 1040, 1041, 1042 and 1044 are generally performed in accordance with the flowcharts and description presented with reference to Figures 7 and 8. The skilled person appreciates that the "access denied" event seen in Fig. 10b does not necessarily result in a restart of the authorization procedure. Alternatively, in some implementations, an access denied event may lead to either one of the preceding steps being repeated until a potential access granted event occurs.

The invention has been described above in detail with reference to embodiments thereof. However, as is readily understood by those skilled in the art, other embodiments are equally possible within the scope of the present invention, as defined by the appended claims.

## Claims

1. A computer-implemented system (100) for authorizing access to one or more smart devices (10) provided in a local environment (20), the system (100) comprising:
a client device (30) provided in, or external to, the local environment (20);
a local network node (40) provided in the local environment (20); and
a remote network node (50) provided external to the local environment (20);
wherein the client device (30) is configured to:
• generate a challenge (32), and
• provide the challenge (32) and a personal identifier (34) to the local network node (40) upon the client device (30) being provided in the local environment, or to the remote network node (50) upon the client device (30) being provided external to the local environment;
wherein either one of the local network node (40), upon the client device (30) being provided in the local environment, or the remote network node (50), upon the client device (30) being provided external to the local environment (20), is configured to:
• generate authorization data (42) comprising at least an authorization code (42a);
wherein the local network node (40), upon the client device (30) being provided in the local environment, is configured to:
• send the personal identifier (34) to the remote network node (50);
wherein the remote network node (50) is configured to:
• generate a link (52) and send the link (52) to an address associated with the personal identifier (34); and
wherein either one of the local network node (40), upon the client device (30) being provided in the local environment, or the remote network node (50), upon the client device (30) being provided external to the local environment (20), is configured to:
• in response to the client device (30) having executed the link (52), send the authorization code (42a) to the client device (30),
• receive an access token request (124a; 124a') from the client device (30), the access token request (124a; 124a') comprising the authorization code (42a),
• validate the authorization code (42a) based on the challenge (32), and
• upon successful validation of the authorization code (42a):
∘ generate an access token (60), and
∘ send the access token (60) to the client device (30), thereby authorizing the client device (30) access to the one or more smart devices (10) in the local environment (20).

2. The computer-implemented system (100) according to claim 1, wherein after receiving the access token (60), the client device (30) is enabled to send one or more control instructions (62) together with the access token (60) to the one or more smart devices (10).

3. The computer-implemented system (100) according to claim 2,
wherein the access token (60) comprises an authorization signature and an expiry time, and is associated with a unique client device identifier (36), and
wherein optionally either one of the local network node (40), upon the client device (30) being provided in the local environment (20), or the remote network node (50), upon the client device (30) being provided external to the local environment (20), is configured to verify the one or more control instructions (62) by verifying that:
the authorization signature is valid,
the expiry time has not passed, and
the unique client device identifier (36) is associated with the client device (30).

4. The computer-implemented system (100) according to any of the preceding claims, wherein either one of the local network node (40), upon the client device (30) being provided in the local environment (20), or the remote network node (50), upon the client device (30) being provided external to the local environment (20), is configured to:
generate a refresh token (70) being associated with the access token (60),
send the refresh token (70) to the client device (30) together with the access token (70), and
send the refresh token (70) to the local network node (40) upon being generated by the remote network node (50), or send the refresh token (70) to the remote network node (50) upon being was generated by the local network node (40),
wherein the refresh token (70) comprises an expiry time and is associated with a unique client device identifier (36), and
wherein the local network node (40) and the remote network node (50) are optionally configured to maintain a record (72) of each generated refresh token (70).

5. The computer-implemented system (100) according to claim 4, wherein the local network node (40), upon the client device (30) being provided in the local environment (20), or the remote network node (50), upon the client device (30) being provided external to the local environment (20), is configured to generate a new access token upon the previous access token (60) being invalid, based on data in the record (72) of the refresh token (70) being associated with the previous access token (60).

6. The computer-implemented system (100) according to any of the claims 4 to 5, wherein the local network node (40), upon the client device (30) being provided in the local environment (20), or the remote network node (50), upon the client device (30) being provided external to the local environment (20), is configured to generate a new refresh token upon:
the expiry time of the previous refresh token (70) having passed, or
the client device (30) having requested a new access token using the previous refresh token (70).

7. The computer-implemented system (100) according to any of the preceding claims, wherein the access token (60) is provided for the client device (30) in the local environment (20), the local network node (40) being configured to generate a local symmetric key, the remote network node (50) being configured to generate a remote asymmetric key pair including a remote private key and a remote public key, wherein the local network node (40) and the remote network node (50) are configured to perform a key exchange, and wherein the remote network node (50) is optionally further configured to generate a complete encryption key by means of the local symmetric key and a remote symmetric key stored at the remote network node (50).

8. The computer-implemented system (100) according to any of the preceding claims, wherein the authorization data (42) further comprises one or more randomly generated numbers, wherein the link (52) is based on the one or more randomly generated numbers, and wherein optionally, in response to the client device (30) having executed the link (52), the remote network node (50) is configured to:
discard the one or more randomly generated numbers, and
send the authorization code (42a) to the client device (30).

9. The computer-implemented system (100) according to any of the preceding claims, wherein the access token request (124a; 124a') further comprises a verifier (33) associated with the challenge (32), and wherein validating the authorization code (42a) involves:
generating a control challenge for the authorization code (42a) based on the verifier (33), and
comparing said generated control challenge to the challenge (32).

10. The computer-implemented system (100) according to any preceding claim,
wherein the link (52) identifies a resource at the remote network node (50), and wherein execution of the link (52) by the client device (30) triggers the identified resource at the remote network node (50), thereby validating the integrity of the link (52), and/or
wherein the one or more smart devices (10) are selected from the group consisting of home furnishing, home appliances, home equipment, office furnishing, office appliances and office equipment.

11. A computer-implemented method (1000) for authorizing access to one or more smart devices (10) provided in a local environment (20), the method (1000) involving:
by a client device (30) provided in, or external to, the local environment (20):
• generating (1010) a challenge (32); and
• providing (1012) the challenge (32) and a personal identifier (34) to a local network node (40) provided in the local environment (20) upon the client device (30) being provided in the local environment, or to a remote network node (50) provided external to the local environment (20) upon the client device (30) being provided external to the local environment (20);
by either one of the local network node (40), upon the client device (30) being provided in the local environment, or the remote network node (50), upon the client device (30) being provided external to the local environment (20):
• generating (1022) authorization data (42) comprising at least an authorization code (42a); and
by the local network node (40), upon the client device (30) being provided in the local environment:
• sending (1024) the personal identifier (34) to the remote network node (50);
by the remote network node (50):
• generating (1034) a link (52), and
• sending (1036) the link (52) to an address associated with the personal identifier (34); and
by either one of the local network node (40), upon the client device (30) being provided in the local environment, or the remote network node (50), upon the client device (30) being provided external to the local environment (20):
• in response to the client device (30) having executed the link (52), sending (1039) the authorization code (42a) to the client device (30);
• receiving (1040) an access token request (124a; 124a') from the client device (30), the access token request (124a; 124a') comprising the authorization code (42a),
• validating (1041) the authorization code (42a) based on the challenge (32), and
• upon successful validation of the authorization code (42a):
∘ generating (1042) an access token (60), and
∘ sending (1044) the access token (60) to the client device (30), thereby authorizing the client device (30) access to the one or more smart devices (10) in the local environment (20).

12. The computer-implemented method (1000) according to claim 11, wherein after receiving the access token (60), the client device (30) sends one or more control instructions (62) together with the access token (60) to the one or more smart devices (10).

13. The computer-implemented method (1000) according to claim 12, wherein the access token (60) comprises an authorization signature and an expiry time, and is associated with a unique client device identifier (36), wherein the method further involves, by the local network node (40), upon the client device (30) being provided in the local environment (20), or by the remote network node (50), upon the client device (30) being provided external to the local environment (20), verifying the one or more control instructions (62) by verifying:
the validity of the authorization signature,
that the expiry time has not passed, and
that the unique client device identifier (36) is associated with the client device (30).

14. The computer-implemented method (1000) according to any one of the claims 11 to 13, wherein the access token (60) is provided for the client device (30) in the local environment (20), the method further involving:
by the local network node (40), generating a local symmetric key,
by the remote network node (50), generating a remote asymmetric key pair including a remote private key and a remote public key, and
performing a key exchange between the remote network node (50) and the local network node (40).

15. The computer-implemented method (1000) according to claim 14, wherein the method further involves, by the remote network node (50), generating a complete encryption key by means of the local symmetric key and a remote symmetric key stored at the remote network node (50).

## Patentansprüche

1. Computerimplementiertes System (100) zur Autorisierung des Zugriffs auf eine oder mehrere intelligente Vorrichtungen (10), die in einer lokalen Umgebung (20) bereitgestellt sind, wobei das System (100) Folgendes umfasst:
eine Client-Vorrichtung (30), die in oder außerhalb der lokalen Umgebung (20) bereitgestellt ist;
einen lokalen Netzwerkknoten (40), der in der lokalen Umgebung (20) bereitgestellt ist; und
einen entfernten Netzwerkknoten (50), der außerhalb der lokalen Umgebung (20) bereitgestellt ist;
wobei die Client-Vorrichtung (30) für Folgendes konfiguriert ist:
• Erzeugen einer Abfrage (32) und
• Bereitstellen der Abfrage (32) und einer persönlichen Kennung (34) für den lokalen Netzwerkknoten (40), wenn die Client-Vorrichtung (30) in der lokalen Umgebung bereitgestellt ist, oder für den entfernten Netzwerkknoten (50), wenn die Client-Vorrichtung (30) außerhalb der lokalen Umgebung bereitgestellt ist;
wobei entweder der lokale Netzwerkknoten (40), wenn die Client-Vorrichtung (30) in der lokalen Umgebung bereitgestellt ist, oder der entfernte Netzwerkknoten (50), wenn die Client-Vorrichtung (30) außerhalb der lokalen Umgebung (20) bereitgestellt ist, für Folgendes konfiguriert ist:
• Erzeugen von Autorisierungsdaten (42), die mindestens einen Autorisierungscode (42a) umfassen;
wobei der lokale Netzwerkknoten (40), wenn die Client-Vorrichtung (30) in der lokalen Umgebung bereitgestellt ist, für Folgendes konfiguriert ist:
• Senden der persönlichen Kennung (34) an den entfernten Netzwerkknoten (50);
wobei der entfernte Netzwerkknoten (50) für Folgendes konfiguriert ist:
• Erzeugen eines Links (52) und Senden des Links (52) an eine Adresse, die der persönlichen Kennung (34) zugeordnet ist; und
wobei entweder der lokale Netzwerkknoten (40), wenn die Client-Vorrichtung (30) in der lokalen Umgebung bereitgestellt ist, oder der entfernte Netzwerkknoten (50), wenn die Client-Vorrichtung (30) außerhalb der lokalen Umgebung (20) bereitgestellt ist, für Folgendes konfiguriert ist:
• als Reaktion darauf, dass die Client-Vorrichtung (30) den Link (52) ausgeführt hat, Senden des Autorisierungscodes (42a) an die Client-Vorrichtung (30),
• Empfangen einer Zugriffstokenanforderung (124a; 124a') von der Client-Vorrichtung (30), wobei die Zugriffstokenanforderung (124a; 124a') den Autorisierungscode (42a) umfasst,
• Validieren des Autorisierungscodes (42a) basierend auf der Abfrage (32) und
• bei erfolgreicher Validierung des Autorisierungscodes (42a):
∘ Erzeugen eines Zugriffstokens (60) und
∘ Senden des Zugriffstokens (60) an die Client-Vorrichtung (30), wodurch der Zugriff der Client-Vorrichtung (30) auf die eine oder mehreren intelligenten Vorrichtungen (10) in der lokalen Umgebung (20) autorisiert wird.

2. Computerimplementiertes System (100) nach Anspruch 1, wobei der Client-Vorrichtung (30) nach dem Empfangen des Zugriffstokens (60) erlaubt wird, eine oder mehrere Steueranweisungen (62) zusammen mit dem Zugriffstoken (60) an die eine oder mehreren intelligenten Vorrichtungen (10) zu senden.

3. Computerimplementiertes System (100) nach Anspruch 2, wobei der Zugriffstoken (60) eine Autorisierungssignatur und eine Ablaufzeit umfasst und mit einer eindeutigen Client-Vorrichtungskennung (36) assoziiert ist, und
wobei optional entweder der lokale Netzwerkknoten (40), wenn die Client-Vorrichtung (30) in der lokalen Umgebung (20) bereitgestellt ist, oder der entfernte Netzwerkknoten (50), wenn die Client-Vorrichtung (30) außerhalb der lokalen Umgebung (20) bereitgestellt ist, zum Verifizieren der einen oder mehreren Steueranweisungen (62) konfiguriert ist, durch Verifizierung, dass:
die Autorisierungssignatur gültig ist,
die Ablaufzeit nicht abgelaufen ist, und
die eindeutige Client-Vorrichtungskennung (36) mit der Client-Vorrichtung (30) assoziiert ist.

4. Computerimplementiertes System (100) nach einem der vorhergehenden Ansprüche, wobei entweder der lokale Netzwerkknoten (40), wenn die Client-Vorrichtung (30) in der lokalen Umgebung (20) bereitgestellt ist, oder der entfernte Netzwerkknoten (50), wenn die Client-Vorrichtung (30) außerhalb der lokalen Umgebung (20) bereitgestellt ist, für Folgendes konfiguriert ist:
Erzeugen eines Aktualisierungstokens (70), der mit dem Zugriffstoken (60) assoziiert ist,
Senden des Aktualisierungstokens (70) an die Client-Vorrichtung (30) zusammen mit dem Zugriffstoken (70) und
Senden des Aktualisierungstokens (70) an den lokalen Netzwerkknoten (40), wenn er durch den entfernten Netzwerkknoten (50) erzeugt wird, oder Senden des Aktualisierungstokens (70) an den entfernten Netzwerkknoten (50), wenn er durch den lokalen Netzwerkknoten (40) erzeugt wurde,
wobei der Aktualisierungstoken (70) eine Ablaufzeit umfasst und mit einer eindeutigen Client-Vorrichtungskennung (36) assoziiert ist, und
wobei der lokale Netzwerkknoten (40) und der entfernte Netzwerkknoten (50) zum Pflegen eines Datensatzes (72) jedes erzeugten Aktualisierungstokens (70) optional konfiguriert sind.

5. Computerimplementiertes System (100) nach Anspruch 4, wobei der lokale Netzwerkknoten (40), wenn die Client-Vorrichtung (30) in der lokalen Umgebung (20) bereitgestellt ist, oder der entfernte Netzwerkknoten (50), wenn die Client-Vorrichtung (30) außerhalb der lokalen Umgebung (20) bereitgestellt ist, zum Erzeugen eines neuen Zugriffstokens, wenn der vorherige Zugriffstoken (60) ungültig ist, basierend auf Daten in dem Datensatz (72) des Aktualisierungstokens (70), der mit dem vorherigen Zugriffstoken (60) assoziiert ist, konfiguriert ist.

6. Computerimplementiertes System (100) nach einem der Ansprüche 4 bis 5, wobei der lokale Netzwerkknoten (40), wenn die Client-Vorrichtung (30) in der lokalen Umgebung (20) bereitgestellt ist, oder der entfernte Netzwerkknoten (50), wenn die Client-Vorrichtung (30) außerhalb der lokalen Umgebung (20) bereitgestellt ist, zum Erzeugen eines neuen Aktualisierungstokens konfiguriert ist, wenn:
die Ablaufzeit des vorherigen Aktualisierungstokens (70) abgelaufen ist, oder
die Client-Vorrichtung (30) einen neuen Zugriffstoken unter Verwendung des vorherigen Aktualisierungstokens (70) angefordert hat.

7. Computerimplementiertes System (100) nach einem der vorhergehenden Ansprüche, wobei der Zugriffstoken (60) für die Client-Vorrichtung (30) in der lokalen Umgebung (20) bereitgestellt ist, wobei der lokale Netzwerkknoten (40) zum Erzeugen eines lokalen symmetrischen Schlüssels konfiguriert ist, wobei der entfernte Netzwerkknoten (50) zum Erzeugen eines entfernten asymmetrischen Schlüsselpaars, das einen entfernten privaten Schlüssel und einen entfernten öffentlichen Schlüssel beinhaltet, konfiguriert ist, wobei der lokale Netzwerkknoten (40) und der entfernte Netzwerkknoten (50) zum Durchführen eines Schlüsselaustauschs konfiguriert sind und wobei der entfernte Netzwerkknoten (50) optional ferner zum Erzeugen eines vollständigen Verschlüsselungsschlüssels mittels des lokalen symmetrischen Schlüssels und eines entfernten symmetrischen Schlüssels, der an dem entfernten Netzwerkknoten (50) gespeichert ist, konfiguriert ist.

8. Computerimplementiertes System (100) nach einem der vorhergehenden Ansprüche, wobei die Autorisierungsdaten (42) ferner eine oder mehrere zufällig erzeugte Zahlen umfassen, wobei der Link (52) auf der einen oder mehreren zufällig erzeugten Zahlen basiert und wobei optional als Reaktion darauf, dass die Client-Vorrichtung (30) den Link (52) ausgeführt hat, der entfernte Netzwerkknoten (50) für Folgendes konfiguriert ist:
Verwerfen der einen oder mehreren zufällig erzeugten Zahlen und
Senden des Autorisierungscodes (42a) an die Client-Vorrichtung (30).

9. Computerimplementiertes System (100) nach einem der vorhergehenden Ansprüche, wobei die Zugriffstokenanforderung (124a; 124a') ferner einen Verifizierer (33) umfasst, der mit der Abfrage (32) assoziiert ist, und wobei das Validieren des Autorisierungscodes (42a) Folgendes beinhaltet:
Erzeugen einer Kontrollabfrage für den Autorisierungscode (42a) basierend auf dem Verifizierer (33) und
Vergleichen besagter erzeugten Kontrollabfrage mit der Abfrage (32).

10. Computerimplementiertes System (100) nach einem der vorhergehenden Ansprüche, wobei der Link (52) eine Ressource am entfernten Netzwerkknoten (50) identifiziert und wobei eine Ausführung des Links (52) durch die Client-Vorrichtung (30) die identifizierte Ressource am entfernten Netzwerkknoten (50) auslöst, wodurch die Integrität des Links (52) validiert wird, und/oder
wobei die eine oder mehreren intelligenten Vorrichtungen (10) aus der Gruppe ausgewählt sind, die aus Haushaltseinrichtungen, Haushaltsgeräten, Haushaltsausstattungen, Büroeinrichtungen, Bürogeräten und Büroausstattungen besteht.

11. Computerimplementiertes Verfahren (1000) zur Autorisierung des Zugriffs auf eine oder mehrere intelligente Vorrichtungen (10), die in einer lokalen Umgebung (20) bereitgestellt sind, wobei das Verfahren (1000) Folgendes beinhaltet:
durch eine Client-Vorrichtung (30), die in oder außerhalb der lokalen Umgebung (20) bereitgestellt ist:
• Erzeugen (1010) einer Abfrage (32); und
• Bereitstellen (1012) der Abfrage (32) und einer persönlichen Kennung (34) für einen lokalen Netzwerkknoten (40), der in der lokalen Umgebung (20) bereitgestellt ist, wenn die Client-Vorrichtung (30) in der lokalen Umgebung bereitgestellt ist, oder für einen entfernten Netzwerkknoten (50), der außerhalb der lokalen Umgebung (20) bereitgestellt ist, wenn die Client-Vorrichtung (30) außerhalb der lokalen Umgebung (20) bereitgestellt ist;
durch entweder den lokalen Netzwerkknoten (40), wenn die Client-Vorrichtung (30) in der lokalen Umgebung bereitgestellt ist, oder den entfernten Netzwerkknoten (50), wenn die Client-Vorrichtung (30) außerhalb der lokalen Umgebung (20) bereitgestellt ist:
• Erzeugen (1022) von Autorisierungsdaten (42), die mindestens einen Autorisierungscode (42a) umfassen; und
durch den lokalen Netzwerkknoten (40), wenn die Client-Vorrichtung (30) in der lokalen Umgebung bereitgestellt ist:
• Senden (1024) der persönlichen Kennung (34) an den entfernten Netzwerkknoten (50);
durch den entfernten Netzwerkknoten (50):
• Erzeugen (1034) eines Links (52) und
• Senden (1036) des Links (52) an eine Adresse, die der persönlichen Kennung (34) zugeordnet ist; und
durch entweder den lokalen Netzwerkknoten (40), wenn die Client-Vorrichtung (30) in der lokalen Umgebung bereitgestellt ist, oder den entfernten Netzwerkknoten (50), wenn die Client-Vorrichtung (30) außerhalb der lokalen Umgebung (20) bereitgestellt ist:
• als Reaktion darauf, dass die Client-Vorrichtung (30) den Link (52) ausgeführt hat, Senden (1039) des Autorisierungscodes (42a) an die Client-Vorrichtung (30);
• Empfangen (1040) einer Zugriffstokenanforderung (124a; 124a') von der Client-Vorrichtung (30), wobei die Zugriffstokenanforderung (124a; 124a') den Autorisierungscode (42a) umfasst,
• Validieren (1041) des Autorisierungscodes (42a) basierend auf der Abfrage (32) und
• bei erfolgreicher Validierung des Autorisierungscodes (42a):
∘ Erzeugen (1042) eines Zugriffstokens (60) und
∘ Senden (1044) des Zugriffstokens (60) an die Client-Vorrichtung (30), wodurch der Zugriff der Client-Vorrichtung (30) auf die eine oder mehreren intelligenten Vorrichtungen (10) in der lokalen Umgebung (20) autorisiert wird.

12. Computerimplementiertes Verfahren (1000) nach Anspruch 11, wobei die Client-Vorrichtung (30) nach dem Empfangen des Zugriffstokens (60) eine oder mehrere Steueranweisungen (62) zusammen mit dem Zugriffstoken (60) an die eine oder mehreren intelligenten Vorrichtungen (10) sendet.

13. Computerimplementiertes Verfahren (1000) nach Anspruch 12, wobei der Zugriffstoken (60) eine Autorisierungssignatur und eine Ablaufzeit umfasst und mit einer eindeutigen Client-Vorrichtungskennung (36) assoziiert ist, wobei das Verfahren ferner, durch den lokalen Netzwerkknoten (40), wenn die Client-Vorrichtung (30) in der lokalen Umgebung (20) bereitgestellt ist, oder durch den entfernten Netzwerkknoten (50), wenn die Client-Vorrichtung (30) außerhalb der lokalen Umgebung (20) bereitgestellt ist, eine Verifizierung der einen oder mehreren Steueranweisungen (62) beinhaltet, durch Verifizierung:
der Gültigkeit der Autorisierungssignatur,
dass die Ablaufzeit nicht abgelaufen ist, und
dass die eindeutige Client-Vorrichtungskennung (36) mit der Client-Vorrichtung (30) assoziiert ist.

14. Computerimplementiertes Verfahren (1000) nach einem der Ansprüche 11 bis 13, wobei der Zugriffstoken (60) für die Client-Vorrichtung (30) in der lokalen Umgebung (20) bereitgestellt ist, wobei das Verfahren ferner Folgendes beinhaltet:
durch den lokalen Netzwerkknoten (40), Erzeugen eines lokalen symmetrischen Schlüssels,
durch den entfernten Netzwerkknoten (50), Erzeugen eines entfernten asymmetrischen Schlüsselpaars, das einen entfernten privaten Schlüssel und einen entfernten öffentlichen Schlüssel beinhaltet, und
Durchführen eines Schlüsselaustauschs zwischen dem entfernten Netzwerkknoten (50) und dem lokalen Netzwerkknoten (40).

15. Computerimplementiertes Verfahren (1000) nach Anspruch 14, wobei das Verfahren ferner durch den entfernten Netzwerkknoten (50) das Erzeugen eines vollständigen Verschlüsselungsschlüssels mittels des lokalen symmetrischen Schlüssels und eines entfernten symmetrischen Schlüssels, der an dem entfernten Netzwerkknoten (50) gespeichert ist, beinhaltet.

## Revendications

1. **Système** mis en œuvre par ordinateur (100) pour autoriser l'accès à un ou plusieurs dispositifs intelligents (10) présents dans un environnement local (20), le système (100) comprenant :
un dispositif client (30) présent dans ou à l'extérieur de l'environnement local (20) ;
un nœud de réseau local (40) présent dans l'environnement local (20) ; et
un nœud de réseau distant (50) présent à l'extérieur de l'environnement local (20) ;
dans lequel le dispositif client (30) est configuré pour :
• générer un défi (32), et
• fournir le défi (32) et un identifiant personnel (34) au nœud de réseau local (40) lorsque le dispositif client (30) est présent dans l'environnement local, ou au nœud de réseau distant (50) lorsque le dispositif client (30) est présent à l'extérieur de l'environnement local ;
dans lequel soit le nœud de réseau local (40), lorsque le dispositif client (30) est présent dans l'environnement local, soit le nœud de réseau distant (50), lorsque le dispositif client (30) est présent à l'extérieur de l'environnement local (20), est configuré pour :
• générer des données d'autorisation (42) comprenant au moins un code d'autorisation (42a) ;
dans lequel le nœud de réseau local (40), lorsque le dispositif client (30) est présent dans l'environnement local, est configuré pour :
• envoyer l'identifiant personnel (34) au nœud de réseau distant (50) ; dans lequel le nœud de réseau distant (50) est configuré pour :
• générer un lien (52) et envoyer le lien (52) à une adresse associée à l'identifiant personnel (34) ; et
dans lequel soit le nœud de réseau local (40), lorsque le dispositif client (30) est présent dans l'environnement local, soit le nœud de réseau distant (50), lorsque le dispositif client (30) est présent à l'extérieur de l'environnement local (20), est configuré pour :
• en réponse au dispositif client (30) ayant exécuté le lien (52), envoyer le code d'autorisation (42a) au dispositif client (30),
• recevoir une demande de jeton d'accès (124a ; 124a') en provenance du dispositif client (30), la demande de jeton d'accès (124a ; 124a') comprenant le code d'autorisation (42a),
• valider le code d'autorisation (42a) sur la base du défi (32), et
• après la validation réussie du code d'autorisation (42a) :
∘ générer un jeton d'accès (60), et
∘ envoyer le jeton d'accès (60) au dispositif client (30), en autorisant ainsi le dispositif client (30) à accéder aux un ou plusieurs dispositifs intelligents (10) dans l'environnement local (20).

2. Système mis en œuvre par ordinateur (100) selon la revendication 1, dans lequel après réception du jeton d'accès (60), le dispositif client (30) est activé pour envoyer une ou plusieurs instructions de commande (62) conjointement avec le jeton d'accès (60) aux un ou plusieurs dispositifs intelligents (10).

3. Système mis en œuvre par ordinateur (100) selon la revendication 2,
dans lequel le jeton d'accès (60) comprend une signature d'autorisation et un délai d'expiration, et est associé à un identifiant unique de dispositif client (36), et
dans lequel facultativement soit le nœud de réseau local (40), lorsque le dispositif client (30) est présent dans l'environnement local (20), soit le nœud de réseau distant (50), lorsque le dispositif client (30) est présent à l'extérieur de l'environnement local (20), est configuré pour vérifier les une ou plusieurs instructions de commande (62) en vérifiant que :
la signature d'autorisation est valide,
le délai d'expiration n'est pas écoulé, et
l'identifiant de dispositif client unique (36) est associé au dispositif client (30).

4. Système mis en œuvre par ordinateur (100) selon l'une quelconque des revendications précédentes, dans lequel soit le nœud de réseau local (40), lorsque le dispositif client (30) est présent dans l'environnement local (20), soit le nœud de réseau distant (50), lorsque le dispositif client (30) est présent à l'extérieur de l'environnement local (20), est configuré pour :
générer un jeton de rafraîchissement (70) associé au jeton d'accès (60),
envoyer le jeton de rafraichissement (70) au dispositif client (30) avec le jeton d'accès (70), et
envoyer le jeton de rafraichissement (70) au nœud de réseau local (40) lorsqu'il a été généré par le nœud de réseau distant (50), ou envoyer le jeton de rafraichissement (70) au nœud de réseau distant (50) lorsqu'il a été généré par le nœud de réseau local (40),
dans lequel le jeton de rafraîchissement (70) comprend un temps d'expiration et est associé à un identifiant de dispositif client unique (36), et
dans lequel le nœud de réseau local (40) et le nœud de réseau distant (50) sont facultativement configurés pour maintenir un enregistrement (72) de chaque jeton de rafraîchissement généré (70).

5. Système mis en œuvre par ordinateur (100) selon la revendication 4, dans lequel le nœud de réseau local (40), lorsque le dispositif client (30) est présent dans l'environnement local (20), ou le nœud de réseau distant (50), lorsque le dispositif client (30) est présent à l'extérieur de l'environnement local (20), est configuré pour générer un nouveau jeton d'accès lorsque le jeton d'accès précédent (60) est invalide, sur la base de données dans l'enregistrement (72) du jeton de rafraîchissement (70) associées au jeton d'accès précédent (60).

6. Système implémenté par ordinateur (100) selon l'une quelconque des revendications 4 à 5, dans lequel le nœud de réseau local (40), lorsque le dispositif client (30) est présent dans l'environnement local (20), ou le nœud de réseau distant (50), lorsque le dispositif client (30) est présent à l'extérieur de l'environnement local (20), est configuré pour générer un nouveau jeton de rafraîchissement lorsque :
le temps d'expiration du jeton de rafraîchissement précédent (70) s'est écoulé, ou
le dispositif client (30) a demandé un nouveau jeton d'accès en utilisant le jeton de rafraichissement précédent (70).

7. Système implémenté par ordinateur (100) selon l'une quelconque des revendications précédentes, dans lequel le jeton d'accès (60) est présent pour le dispositif client (30) dans l'environnement local (20), le nœud de réseau local (40) étant configuré pour générer une clé symétrique locale, le nœud de réseau distant (50) étant configuré pour générer une paire de clés asymétriques distantes incluant une clé privée distante et une clé publique distante, dans lequel le nœud de réseau local (40) et le nœud de réseau distant (50) sont configurés pour effectuer un échange de clés, et dans lequel le nœud de réseau distant (50) est facultativement en outre configuré pour générer une clé de chiffrement complète au moyen de la clé symétrique locale et d'une clé symétrique distante stockée au niveau du nœud de réseau distant (50).

8. Système mis en œuvre par ordinateur (100) selon l'une quelconque des revendications précédentes, dans lequel les données d'autorisation (42) comprennent en outre un ou plusieurs nombres générés de manière aléatoire, dans lequel le lien (52) est basé sur les un ou plusieurs nombres générés de manière aléatoire, et dans lequel, facultativement, en réponse au dispositif client (30) ayant exécuté le lien (52), le nœud de réseau distant (50) est configuré pour :
rejeter les un ou plusieurs nombres générés de manière aléatoire, et
envoyer le code d'autorisation (42a) au dispositif client (30).

9. Système mis en œuvre par ordinateur (100) selon l'une quelconque des revendications précédentes, dans lequel la demande de jeton d'accès (124a ; 124a') comprend en outre un vérificateur (33) associé au défi (32), et dans lequel la validation du code d'autorisation (42a) implique les étapes consistant à :
générer un défi de commande pour le code d'autorisation (42a) sur la base du vérificateur (33), et
comparer ledit défi de commande généré au défi (32).

10. Système mis en œuvre par ordinateur (100) selon l'une quelconque des revendications précédentes,
dans lequel le lien (52) identifie une ressource au niveau du nœud de réseau distant (50), et dans lequel l'exécution du lien (52) par le dispositif client (30) déclenche la ressource identifiée au niveau du nœud de réseau distant (50), en validant ainsi l'intégrité du lien (52), et/ou
dans lequel les un ou plusieurs dispositifs intelligents (10) sont choisis dans le groupe comprenant de l'ameublement domestique, de appareils ménagers, des équipement domestique, de l'ameublement de bureau, des appareils de bureau et des équipements de bureau.

11. Procédé mis en œuvre par ordinateur (1000) pour autoriser l'accès à un ou plusieurs dispositifs intelligents (10) fournis dans un environnement local (20), le procédé (1000) impliquant les étapes consistant à :
par l'intermédiaire d'un dispositif client (30) présent dans ou à l'extérieur de l'environnement local (20) :
• générer (1010) un défi (32) ; et
• fournir (1012) le défi (32) et un identifiant personnel (34) à un nœud de réseau local (40) présent dans l'environnement local (20) lorsque le dispositif client (30) est présent dans l'environnement local, ou à un nœud de réseau distant (50) présent à l'extérieur de l'environnement local (20) lorsque le dispositif client (30) est présent à l'extérieur de l'environnement local (20) ;
par l'intermédiaire du nœud de réseau local (40), lorsque le dispositif client (30) est présent dans l'environnement local, ou du nœud de réseau distant (50), lorsque le dispositif client (30) est présent à l'extérieur de l'environnement local (20) :
• générer (1022) des données d'autorisation (42) comprenant au moins un code d'autorisation (42a) ; et
par l'intermédiaire du nœud de réseau local (40), lorsque le dispositif client (30) est présent dans l'environnement local :
• envoyer (1024) l'identifiant personnel (34) au nœud de réseau distant (50) ;
par l'intermédiaire du nœud de réseau distant (50) :
• générer (1034) un lien (52), et
• envoyer (1036) le lien (52) à une adresse associée à l'identifiant personnel (34) ; et
par l'intermédiaire du nœud de réseau local (40), lorsque le dispositif client (30) est présent dans l'environnement local, ou du nœud de réseau distant (50), lorsque le dispositif client (30) est présent à l'extérieur de l'environnement local (20) :
• en réponse au dispositif client (30) ayant exécuté le lien (52), envoyer (1039) le code d'autorisation (42a) au dispositif client (30),
• recevoir (1040) une demande de jeton d'accès (124a ; 124a') en provenance du dispositif client (30), la demande de jeton d'accès (124a ; 124a') comprenant le code d'autorisation (42a),
• valider (1041) le code d'autorisation (42a) sur la base du défi (32), et
• après la validation réussie du code d'autorisation (42a) :
∘ générer (1042) un jeton d'accès (60), et
∘ envoyer (1044) le jeton d'accès (60) au dispositif client (30), en autorisant le dispositif client (30) à accéder aux un ou plusieurs dispositifs intelligents (10) dans l'environnement local (20).

12. Procédé mis en œuvre par ordinateur (1000) selon la revendication 11, dans lequel après réception du jeton d'accès (60), le dispositif client (30) envoie une ou plusieurs instructions de commande (62) conjointement avec le jeton d'accès (60) aux un ou plusieurs dispositifs intelligents (10).

13. Procédé mis en œuvre par ordinateur (1000) selon la revendication 12, dans lequel le jeton d'accès (60) comprend une signature d'autorisation et une durée d'expiration, et est associé à un identifiant de dispositif client unique (36), dans lequel le procédé implique en outre, par l'intermédiaire du nœud de réseau local (40), lorsque le dispositif client (30) est présent dans l'environnement local (20), ou par l'intermédiaire du nœud de réseau distant (50), lorsque le dispositif client (30) est présent à l'extérieur de l'environnement local (20), de vérifier les une ou plusieurs instructions de commande (62) en vérifiant :
la validité de la signature d'autorisation,
que le délai d'expiration n'est pas écoulé, et
que l'identifiant de dispositif client unique (36) est associé au dispositif client (30).

14. Procédé mis en œuvre par ordinateur (1000) selon l'une quelconque des revendications 11 à 13, dans lequel le jeton d'accès (60) est présent pour le dispositif client (30) dans l'environnement local (20), le procédé impliquant en outre les étapes consistant à :
par l'intermédiaire du nœud de réseau local (40), générer une clé symétrique locale,
par l'intermédiaire du nœud de réseau distant (50), générer une paire de clés asymétriques distantes comprenant une clé privée distante et une clé publique distante, et
effectuer un échange de clé entre le nœud de réseau distant (50) et le nœud de réseau local (40).

15. Procédé mis en œuvre par ordinateur (1000) selon la revendication 14, dans lequel le procédé implique en outre, par l'intermédiaire du nœud de réseau distant (50), la génération d'une clé de chiffrement complète au moyen de la clé symétrique locale et d'une clé symétrique distante stockées au niveau du nœud de réseau distant (50).
